(19) Europäisches Patentamt
European Patent Office
Office européen des brevets

(11) **EP 4 345 697 A1**

(12) **EUROPEAN PATENT APPLICATION**

(43) Date of publication:
**03.04.2024   Bulletin 2024/14**

(21) Application number: **23198714.0**

(22) Date of filing: **21.09.2023**

(51) International Patent Classification (IPC):
**G06N 7/01** $^{(2023.01)}$       **G06N 3/098** $^{(2023.01)}$

(52) Cooperative Patent Classification (CPC):
**G06N 7/01; G06N 3/098**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.09.2022   GB 202214033**

(71) Applicant: **Samsung Electronics Co., Ltd.
Suwon-si, Gyeonggi-do 16677 (KR)**

(72) Inventors:
• **KIM, Minyoung
  Staines, TW18 4QE (GB)**
• **HOSPEDALES, Timothy
  Staines, TW18 4QE (GB)**

(74) Representative: **Appleyard Lees IP LLP
15 Clare Road
Halifax HX1 2HY (GB)**

(54) **METHOD AND SYSTEM FOR FEDERATED LEARNING**

(57)   Broadly speaking, embodiments of the present techniques provide a method for training a machine learning, ML, model to update global and local versions of a model. We propose a novel hierarchical Bayesian approach to Federated Learning (FL), where our models reasonably describe the generative process of clients' local data via hierarchical Bayesian modeling: constituting random variables of local models for clients that are governed by a higher-level global variate. Interestingly, the variational inference in our Bayesian model leads to an optimisation problem whose block-coordinate descent solution becomes a distributed algorithm that is separable over clients and allows them not to reveal their own private data at all, thus fully compatible with FL.

FIGURE 2b

**Description**

**Field**

The present application generally relates to a method and system for federated learning. In particular, the present application provides a method for training a machine learning, ML, model to update global and local versions of a model without a central server having to access user data.

**Background**

These days, many clients/client devices (e.g. smartphones), contain a significant amount of data that can be useful for training machine learning, ML, models. There are $N$ clients with their own private data $D_i$, $i = 1, ..., N$. Usually the client devices are less powerful computing devices with small data $D_i$ compared to a central server. In traditional *centralised machine learning,* there is a powerful computer that can collect all client data $D = \bigcup_{i=1}^{N} D_i$ and train a model with $D$. Federated Learning (FL) aims to enable a set of clients to collaboratively train a model in a privacy preserving manner, without sharing data with each other or a central server. That is, in *federated learning* (FL), it is prohibited to share clients' local data as the data are confidential and private. Instead, clients are permitted to train/update their own models with their own data and share the local models with others (e.g., to a global server). Then, FL is all about how to train clients' local models and aggregate them to build a global model that is as powerful as the centralised model (*global prediction*) and flexible enough to adapt to unseen clients (*personalisation*). Compared to conventional centralised optimisation problems, FL comes with a host of statistical and systems challenges - such as communication bottlenecks and sporadic participation. The key statistical challenge is non-independent and non-identically distributed (non-i.i.d) data distributions across clients, each of which has a different data collection bias and potentially a different data labeling function (e.g., user preference learning). However, even when a global model can be learned, it often underperforms on each client's local data distribution in scenarios of high heterogeneity. Studies attempted to alleviate this by personalising learning at each client, allowing each local model to deviate from the shared global model. However, this remains challenging given that each client may have a limited amount of local data for personalised learning.

The applicant has therefore identified the need for an improved method of performing federated learning.

**Summary**

In a first approach of the present techniques, there is provided a computer-implemented method for training, using federated learning, a global machine learning, ML, model for use by a plurality of client devices. The method comprises defining, at a server, a Bayesian hierarchical model which links a global random variable with a plurality of local random variables; one for each of the plurality of client devices, wherein the Bayesian hierarchical model comprises a posterior distribution which is suitable for predicting the likelihood of the global random variable and the local random variables given each individual dataset at the plurality of client devices and approximating, at the server, the posterior distribution using a global ML model and a plurality of local ML models, wherein the global ML model is parameterised by a global parameter which is updated at the server, each of the plurality of local ML models is associated with one of the plurality of client devices, and each local ML model is parameterised by a local parameter which is updated at the client device which is associated with the local ML model. The method further comprises sending, from the server, the global parameter to a predetermined number of the plurality of client devices; receiving, at the server from each of the number of the plurality of client devices, an updated local parameter, wherein each updated local parameter has been determined by training, on the client device, the local ML model using a local dataset, and wherein during training of the local ML model, the global parameter is fixed; and training, at the server, the global ML model using each of the received updated local parameters to determine an updated global parameter, wherein during training of the global model, each local parameter is fixed

In other words, there is provided a computer-implemented method for training, on a server, a machine learning, ML, model using a hierarchical Bayesian approach to federated learning. The method described above may be considered to use *block-coordinate optimization,* because it alternates two steps: (i) updating/optimizing all local parameters while fixing the global parameter and (ii) updating the global parameter with all local parameters fixed. The updating of the local parameters uses the local dataset but the updating of the global parameters uses the local parameters but not the local datasets. Thus, the local datasets remain on the client device and there is no sharing of data between the client device and the server. Data privacy can thus be respected. The local parameters are not sent from the server to the client device when the global parameter is sent. In other words, only the global parameter is sent to each client device involved in a round of federated learning.

In a second approach of the present techniques, there is provided a system for training using federated learning, a global machine learning, ML, model, the system comprising: a server comprising a processor coupled to memory, and a plurality of client devices each comprising a processor coupled to memory. The processor at the server is configured to define a Bayesian hierarchical model which links a global random variable with a plurality of local random variables; one for each of the plurality of client devices, wherein the Bayesian hierarchical model comprises a posterior distribution which is suitable for predicting the likelihood of the global random variable and the local random variables given each individual dataset at the plurality of client devices and approximate the posterior distribution using a global ML model and a plurality of local ML models, wherein the global ML model is parameterised by a global parameter which is updated at the server, each of the plurality of local ML models is associated with one of the plurality of client devices, and each local ML model is parameterised by a local parameter which is updated at the client device which is associated with the local ML model. The processor at the server is further configured to send the global parameter to a predetermined number of the plurality of client devices; receive, from each of the predetermined number of the plurality of client devices, an updated local parameter; and train the global ML model using each of the received updated local parameters to determine an updated global parameter, wherein during training of the global model, each local parameter is fixed. The processor at each of the client devices is configured to receive the global parameter; train the local ML model using a local dataset on the client device to determine an updated local parameter, wherein during training of the local ML model, the global parameter is fixed; and send the updated local parameter to the server.

The following features apply to both aspects.

A Bayesian hierarchical model (also termed hierarchical Bayesian model) is a statistical model written in multiple levels (hierarchical form) that estimates parameters of a posterior distribution using the Bayesian method. A Bayesian hierarchical model makes use of two important concepts in deriving the posterior distribution, namely: hyperparameters (parameters of the prior distribution) and hyperpriors (distributions of hyperparameters). The global random variable may be termed shared knowledge, a hyperparameter or a higher-level variable and may be represented by $\phi$. The local random variables may be termed individual latent variables or network weights and may be represented by $\{\theta_i\}_{i=1}^{N}$ where N is the number of the plurality of client devices. The global random variable may link the local random variables by governing a distribution of the local random variables. For example, the distribution (also termed prior) for the global random variable $\phi$ and the local random variables $\{\theta_i\}_{i=1}^{N}$ may be formed in a hierarchical manner as:

$$p(\phi, \theta_1, \ldots, \theta_N) = p(\phi) \prod_{i=1}^{N} p(\theta_i | \phi).$$

The posterior distibution may be defined as

$$p(\phi, \theta_{1:N} | D_{1:N})$$

where $D_i$ is the dataset at each client device. Applying Bayes' rule, the posterior distribution is proportional to a product of separate distributions for the global random variable and the local random variable. For example, the posterior distribution may be expressed as being proportional to

$$p(\phi) \prod_{i=1}^{N} p(\theta_i | \phi) p(D_i | \theta_i)$$

where $p(\phi)$ is the distribution for $\phi$, $p(\theta_i | \phi)$ is the distribution for $\theta_i$ given $\phi$ and $p(\theta_i | \phi)$ *is* the distribution of each dataset given $\theta_i$. Although the posterior distribution can be well defined, it is difficult to solve and thus an approximation is used.

Approximating the posterior distribution may comprise using variational inference, for example the posterior distribution may be approximated using a density distribution $q(\phi, \theta_1, \ldots, \theta_N; L)$ which is parameterized by *L*. Approximating the posterior distribution may further comprise factorising the density distribution, e.g.

$$q(\phi, \theta_1, \ldots, \theta_N; L) := q(\phi; L_0) \prod_{i=1}^{N} q_i(\theta_i; L_i),$$

where $q(\phi; L_0)$ is the global ML model which is parameterised by the global parameter $L_0$ and $q_i(\theta_i; L_i)$ which is the local ML model for each client device and which is parameterised by the local parameter $L_i$. The global parameter may thus be termed a global variational parameter. Similarly, the local parameter may be termed a local variational parameter. It will be appreciated that each global parameter and each local parameter may comprise a plurality of parameters (e.g. a vector of parameters).

By separately modelling the global parameter and the local parameters, it is possible to have different structures for at least some of the global ML model and the local ML models. In other words, the global ML model may have a different backbone from one or more of the local ML models. Similarly, the local ML models may have the same or different backbones. These different structures and/or backbones can be flexibly chosen using prior or expert knowledge about the problem domains on hand.

It will be appreciated that the sending, receiving and determining steps may be repeated multiple times (e.g. there are multiple rounds) until there is convergence of the global ML model and the local ML models. The number of client devices which receive the global parameter at each sending step may be lower than or equal to the total number of client devices.

Training the global ML model comprises optimising using a regularization term which penalises deviation between the updated global parameter and the global parameter which was sent to the client devices (i.e. between the updated global parameter and the previous version of the global parameter). Training the global ML model may comprise optimising using a regularization term which penalises deviation between the updated global parameter and each of the received local parameters. The optimisation may be done using any suitable technique, e.g. stochastic gradient descent (SGD). The regularization term may be any suitable term, e.g. a Kulback-Leibler divergence. Thus, one possible expression for the training of the global ML model may be:

$$\min_{L_0} \sum_i^{N_f} E_{q(\phi;L_0)}[KL(q_i(\theta_i; L_i)||p(\theta_i|\phi)] + KL(q(\phi; L_0)||p(\phi))$$

where $E_{q(\phi;L_0)}$ is an evidence lower bound function, $q_i(\theta_i; L_i)$ is the local ML model for each client device, $\theta_i$ is the local random variable for the ith client device, $L_i$ is the local parameter for the ith client device, $p(\theta_i|\phi)$ is the prior for each local random variable $\theta_i$ given the global random variable $\phi$, $N_f$ is the number of client devices which received the global parameter $L_0$, KL represents each regularisation term using a Kulback-Leibler divergence, $q(\phi; L_0))$ is the global ML model parameterised by the global random variable $\phi$ and $p(\phi)$ is the prior for $\phi$.

Training, using a local dataset on the client device, may comprises optimising using a loss function to fit each local parameter to the local dataset. Any suitable function which fits the local ML model to the local dataset may be used. Training, using a local dataset on the client device, may comprises optimising using a regularisation term which penalises deviation between each updated local parameter and a previous local parameter. As for the training at the server, the optimisation may be done using any suitable technique, e.g. stochastic gradient descent (SGD). The regularization term may be any suitable term, e.g. a Kulback-Leibler divergence.

Thus, one possible expression for the training of the local ML model may be:

$$\min_{L_i} E_{q_i(\theta_i;L_i)}[-\log p(D_i|\theta_i)] + E_{q(\phi;L_0)}[KL(q_i(\theta_i; L_i)||p(\theta_i|\phi)]$$

where $E_{q(\phi;L_0)}$ and $E_{q_i(\theta_i;L_i)}$ are evidence lower bound functions, $q_i(\theta_i; L_i)$ is the local ML model for each client device, $\theta_i$ is the local random variable for the ith client device, $L_i$ is the local parameter for the ith client device, $p(D_i|\theta_i)$ is the likelihood of each dataset $D_i$ given each local random variable $\theta_i$, $p(\theta_i|\phi)$ is the distribution for each local random variable $\theta_i$ given the global random variable $\phi$, and KL represents the regularisation term using a Kulback-Leibler divergence.

Approximating the posterior distribution may comprise using a Normal-Inverse-Wishart model. For example, a Normal-Inverse-Wishart model may be used as the global ML model and a global mean parameter and a global covariance parameter may be used the global parameter. A mixture of two Gaussian functions may be used the local ML model and a local mean parameter may be used as the local parameter. When using a Normal-Inverse-Wishart model, the training of the global ML model may be expressed as:

$$m_0^* = \frac{p}{N+1} \sum_{i=1}^{N} m_i,$$

$$V_0^* = \frac{n_0}{N + d + 2}((1 + N\epsilon^2)I + m_0^*(m_0^*)^\top + \sum_{i=1}^{N} \rho(m_0^*, m_i, p))$$

In other words, the updated global mean parameter $m_0^*$ may be calculated from a sum of the local mean parameters $m_i$ for each of the client devices. The updated global mean parameter $m_0^*$ is proportional to the sum where the factor is the $p$ is the user-specified hyperparameter where 1 - $p$ corresponds to the dropout probability divided by one more than the total number N of client devices. The updated global covariance parameter $V_0^*$ may be calculated from the sum above, where $n_0$ is a scalar parameter at the server,. N is the total number of client devices, d is the dimension, $\varepsilon$ is a tiny constant, $I$ is the identity matrix, $m_0^*$ is the updated global mean parameter, $m_0$ is the current global mean parameter, $m_i$ is the local mean parameter for each of the client device and $p$ is the user-specified hyperparameter, and

$$\rho(m_0, m_i, p) = pm_i m_i^\top - pm_0 m_i^\top - pm_i m_0^\top + m_0 m_0^\top.$$

When using a Normal-Inverse-Wishart model, the training of the local ML model may be expressed as:

$$\min_{m_i} \mathcal{L}_i(m_i) := -\log p(D_i | \tilde{m}_i) + \frac{p}{2}(n_0 + d + 1)(m_i - m_0)^\top V_0^{-1}(m_i - m_0),$$

where $\mathcal{L}_i$ is the local parameter represented by $m_i$ the local mean parameter, $p(D_i|m_i)$ is the distribution of the local dataset $D_i$ given a dropout version $\tilde{m}_i$ of the local mean parameter, $p$ is the user-specified hyperparameter, $n_0$ is a scalar parameter, d is the dimension, $m_0$ is the current global mean parameter (which is fixed) and $V_0$ is the current global covariance parameter (which is fixed). In other words, the training (i.e. optimisation) at both the server and each client device is greatly simplified by the use of the Normal-Inverse-Wishart model. In summary, each client i a priori gets its own network parameters $\theta_i$ as a Gaussian-perturbed version of the shared global mean parameters $\mu$ from the server, namely $\theta_i | \phi \sim \mathcal{N}(\mu, \Sigma)$. This is intuitively appealing, but not optimal for capturing more drastic diversity or heterogeneity of local data distributions across clients.

As an alternative to using a Normal-Inverse-Wishart model, the method may use a mixture model which comprises multiple different prototypes (e.g. K) and each prototype is associated with a separate global random variable so that $\phi = \{\mu_1, ..., \mu_K\}$. In other words, a prototype is a component in the mixture. Multiple different global mixture components can represent different client data statistics/features. Such a model may be more useful where clients' local data distributions, as well as their domains and class label semantics, are highly heterogeneous. When using the mixture model, the global ML model may be defined as a product of a fixed number of multivariate Normal distributions wherein the fixed number is determined by the number of prototypes which cover the client devices data distributions. The global model may be defined for example using

$$q(\phi, L_0) = \prod_{j=1}^{K} \mathcal{N}(\mu_j; r_j, \epsilon^2 I)$$

where $\mathcal{N}$ is a multivariate normal distribution, $\mu_j$ is the global random variable for each network (in other words $\phi = \{\mu_1, ..., \mu_K\}$), $\{r_j\}_{j=1}^{K}$ are variational parameters representing the global parameter $L_0$ and $\varepsilon$ is near 0. Each local model may then be chosen from a network (which may also be termed a prototype).

$$q(\theta_i) = \mathcal{N}(\theta_i; m_i, \epsilon^2 I),$$

where $\mathcal{N}$ is a multivariate normal distribution, $\theta_i$ is the local parameter for each client device, $m_i$ is the local mean parameter for each client device, and $\varepsilon$ is near 0.

When using a mixture model, the training of the global ML model may be expressed as:

$$\min_{\{r_j\}_{j=1}^{K}} \frac{1}{2} \sum_{j=1}^{K} ||r_j||^2 - \sum_{i=1}^{N} \log \sum_{j=1}^{K} \exp(-\frac{||m_i - r_j||^2}{2\sigma^2}).$$

where $m_i$ is the local mean parameter for each client device, $\{r_j\}_{j=1}^{K}$ are variational parameters representing the global parameter $L_0$ and there are K networks.

When using a mixture model, the training of the local ML model may be expressed as:

$$\min_{m_i} \mathbb{E}_{q_i(\theta_i)}[-\log p(D_i|\theta_i)] - \log \sum_{j=1}^{K} \exp\left(-\frac{||m_i - r_j||^2}{2\sigma^2}\right).$$

Where $\min_{m_i} \mathbb{E}_{q_i(\theta_i)}$ represents the client update optimisation, and as before $m_i$ is the local mean parameter for each client device, $\{r_j\}_{j=1}^{K}$ are variational parameters representing the global parameter $L_0$, $D_i$ is the local dataset at each client device and $\theta_i$ is the local parameter for each client device and there are K networks.

In other words, there is a system for training a machine learning, ML, model using a hierarchical Bayesian approach to federated learning, the system comprising: a plurality of client devices, each client device having a set of personal training data and a local version of the ML model; and a central server for centrally training the ML model.

Each client device may locally train the local version of the ML model and transmit at least one network weight (i.e. local parameter) to the server.

The server may: link the at least one network weight to a higher-level variable (i.e. the global random variable); and train the ML model to optimise a function dependent on the weights from the client devices and a function dependent on the higher-level variable.

The client device may be a constrained-resource device, but which has the minimum hardware capabilities to use a trained neural network/ML model. The client device may be any one of: a smartphone, tablet, laptop, computer or computing device, virtual assistant device, a vehicle, an autonomous vehicle, a robot or robotic device, a robotic assistant, image capture system or device, an augmented reality system or device, a virtual reality system or device, a gaming system, an Internet of Things device, or a smart consumer device (such as a smart fridge). It will be understood that this is a non-exhaustive and non-limiting list of example client devices.

Once the global ML model has been trained, each client device can use the current global ML model as a basis for predicting an output given an input. For example, the input may be an image and the output may be a classification for the input image, e.g. for one or more objects within the image. In this example, the local dataset on each client device is a set of labelled/classified images. There are two ways the global ML model may be used: global prediction and personalised prediction.

According to another aspect of the present techniques, there is provided a computer-implemented method for generating, using a client device, a personalised model using the global ML model which has been trained as described above. The method comprises receiving, at the client device from the server, the global parameter for the trained global ML model; optimising, at the client device, a local parameter using the received global parameter, by applying a regularisation term which penalises deviation between the optimised local parameter and the received global parameter, and outputting the optimised local parameter as the personalised model. During the optimising step, sampling may be used to generate estimates for the local parameter. This method is useful when there is no personal data on the client device which can be used to train the global ML model.

According to another aspect of the present techniques, there is provided a computer-implemented method for generating, using a client device, a personalised model using the global ML model which has been trained as described above. The method comprises receiving, at the client device from the server, the global parameter for the trained global ML model; obtaining a set of personal data; optimising, at the client device, a local parameter using the received global parameter, by applying a regularisation term which penalises deviation between the optimised local parameter and the received global parameter and by applying a loss function over the set of personal data, and outputting the optimised local parameter as the personalised model. This method is useful when there is personal data on the client device which can be used to train the global ML model.

An example of optimisation during personalisation can be defined as:

$$\min_{v} \; \mathbb{E}_{v(\theta)}[-\mathrm{log}p(D^p|\theta)] + KL(v(\theta)||p(\theta|\phi^*))$$

where $D^p$ is the data for personalised training, $\phi^*$ is the FL-trained server model parameters and $v(\theta)$ is the variational distribution that is optimised to approximate the personalised posterior $p(\theta|\phi^*)$.

When using the Normal-Inverse-Wishart model, an example of optimisation during personalisation can be defined as:

$$\min_{m} \; -\mathrm{log}p(D_i|\tilde{m}_i) + \frac{p}{2}(n_0 + d + 1)(m_i - m_0)^\mathsf{T} V_0^{-1}(m_i - m_0)$$

where $\tilde{m}_i$ is the dropout version of $m_i$ the local model parameter, the global parameters are $L_0 = (m_0, V_0)$, $m_0$ and $V_0$ are fixed during the optimisation and $D_i$ is the set of personal data and

$$v(\theta) = \prod_{l} \; (p \cdot \mathcal{N}(\theta_i[l]; m_i[l], \epsilon^2 I) + (1-p) \cdot \mathcal{N}(\theta_i[l]; 0, \epsilon^2 I))$$

When using the mixture model, an example of optimisation during personalisation can be defined as:

$$\min_{m} \; \mathbb{E}_{v(\theta)}[-\mathrm{log}p(D^p|\theta)] - \mathrm{log}\sum_{j=1}^{K} \exp(-\frac{||m-r_j||^2}{2\sigma^2}).$$

where $v(\theta) = \mathcal{N}(\theta; \mathrm{m}, \epsilon^2 I)$, where $\varepsilon$ is a small positive constant and m are the only parameters that are learnt.

Once the model has been updated on the client device, the updated local model can be used to process data, e.g. an input. According to another aspect of the present techniques there is provided a computer-implemented method for using, at a client device, a personalised model to process data, the method comprising generating a personalised model as described above; receiving an input; and predicting, using the personalised model, an output based on the received input.

In a related approach of the present techniques, there is provided a computer-readable storage medium comprising instructions which, when executed by a processor, causes the processor to carry out any of the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

In a related approach of the present techniques, there is provided a client device comprising a processor coupled to memory, wherein the processor is configured to: receive, from a server, a global parameter for a trained global ML model which has been trained as described above; determine whether there is a set of personal data on the client device; when there is no set of personal data, optimise a local parameter of a local ML model using the received global parameter, by applying a regularisation term which penalises deviation between the optimised local parameter and the received global parameter, and when there is a set of personal data, optimise a local parameter of a local ML model using the received global parameter by applying a regularisation term which penalises deviation between the optimised local parameter and the received global parameter and by applying a loss function over the set of personal data; outputting the optimised local parameter as a personalised model; and predicting, using the personalised model, an output based on a newly received input.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The method described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/o may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

## Brief description of the drawings

Implementations of the present techniques will now be described, by way of example only, with reference to the accompanying drawings, in which:

Figure 1a is a schematic diagram of an independent and individually distributed client device which uses the present techniques;

Figure 1b is a variation of the diagram of Figure 1a showing the client data and the input and output;

Figure 1c is a schematic diagram showing a plurality of client devices of Figure 1a and illustrating global prediction;

Figure 1d is a schematic diagram showing a plurality of client devices of Figure 1a and illustrating personalised prediction;

Figure 2a is an example algorithm which is suitable for implementing the general training framework of the present techniques;

Figure 2b is a flowchart showing steps carried out by the client device(s) and the server in each round implementing the general training framework of the present techniques;

Figure 2c is a schematic representation of the update steps carried out by each client device during the method of Figure 2b;

Figure 2d is a schematic representation of the update steps carried out by the server during the method of Figure 2b;

Figure 2e is an example algorithm which is suitable for implementing the general training framework of Figure 2a using block-coordinate descent the present techniques;

Figure 2f is an example algorithm which is suitable for implementing the general global prediction framework of the present techniques;

Figure 2g is a flowchart showing steps carried out by the client device(s) and the server in the general global prediction framework such as that shown in Figure 2d;

Figure 2h is a schematic representation of the method of Figures 2f and 2g;

Figure 2i is an example algorithm which is suitable for implementing the personalisation framework of the present techniques;

Figure 2j is a flowchart showing steps carried out by the client device(s) and the server in the general personalisation framework such as that shown in Figure 2d;

Figure 2k is a schematic representation of the method of Figures 2i and 2j;

Figure 3a is an example of pseudo code which is suitable for implementing a training algorithm using the normal-inverse-Wishart case;

Figure 3b illustrates schematically how global prediction may be applied using the normal-inverse-Wishart case;

Figure 3c is example pseudo code to implement global prediction using the normal-inverse-Wishart case;

Figure 3d illustrates schematically how personalisation may be applied using the normal-inverse-Wishart case;

Figure 3e is example pseudo code to implement personalisation using the normal-inverse-Wishart case;

Figure 4a is an example of pseudo code which is suitable for implementing a training algorithm using the mixture case;

Figure 4b is example pseudo code to implement global prediction using the mixture case;

Figure 4c is example pseudo code to implement personalisation using the mixture case;

Figures 5a and 5b are tables showing results of experiments testing global prediction performance (initial accuracy) and personalisation performance on CIFAR 100;

Figures 5c and 5d are tables showing results of experiments testing global prediction performance (initial accuracy) and personalisation performance on MNIST/FMNIST/ENMIST;

Figure 5e comprises tables showing results of experiments testing global prediction performance (initial accuracy) and personalisation performance on CIFAR-C-100;

Figures 6a and 6b plots the accuracy against dropout probability for global prediction and personalisation for both a known technique and the current technique respectively;

Figures 6c and 6d plots the accuracy against number of networks for global prediction and personalisation for three known techniques and the current technique respectively;

Figure 6e includes tables showing the global prediction and personalisation accuracy on CIFAR-100;

Figure 6f shows tables showing the global prediction and personalisation accuracy on CIFAR-C-100;

Figures 7a to 7d are tables comparing the complexity and running times of the proposed algorithms with FedAvg, and

Figure 8 is a block diagram of a system for federated learning.

## Detailed description of the drawings

Broadly speaking, embodiments of the present techniques provide a method for training a machine learning, ML, model to update global and local versions of a model without the server having to access user data.

The two most popular existing federated learning, FL, algorithms are Fed-Avg which is described for example in "Communication-Efficient Learning of Deep Networks from Decentralized Data" by McMahan et al published in AI and Statistics in 2017 and Fed-Prox which is described in "Federated Optimization in Hetergeneous Networks" by Li et al published in arXiv. Their learning algorithms are quite simple and intuitive: repeat several rounds of *local update* and *aggregation*. At each round, the server maintains a global model $\theta$ and distribute it to all clients. Then clients update the model (initially the server-sent model) with their own data (*local update*) and upload the updated local models to the server. Then the server takes the average of the clients' local models which becomes a new global model ( *aggregation*). During the local update stage, Fed-Prox imposes an additional regularisation to enforce the updated model to be close to the global model.

Several attempts have been made to model the FL problem from a Bayesian perspective. Introducing distributions on model parameters $\theta$ has enabled various schemes for estimating a global model posterior $p(\theta|D_{1:N})$ from clients' local posteriors $p(\theta|D_i)$, or to regularise the learning of local models given a prior defined by the global model. Although some recent FL algorithm aim to approach the FL problem by Bayesian methods, they are not fully satisfactory to be interpreted as a principled Bayesian model, and often resort to ad-hoc treatments. The key difference between our approach and these previous methods is: They treat network weights θ as a random variable **shared** across all clients, while our approach assigns individual $\theta_i$ to each client i and link the random variables $\theta_i$'s via another higher-level variable $\phi$. That is, what is introduced is a *hierarchical* Bayesian model that assigns each client its own random variable $\theta_i$ for

model weights, and these are linked via a higher level random variable $\phi$ as $p(\theta_{1:N}, \phi) = p(\phi) \prod_{i=1}^{N} p(\theta_i|\phi)$. This has several crucial benefits: Firstly, given this hierarchy, variational inference in our framework decomposes into sepa-

rable optimisation problems over $\theta_i$ s and $\phi$, enabling a practical Bayesian learning algorithm to be derived that is fully compatible with FL constraints, without resorting to ad-hoc treatments or strong assumptions. Secondly, this framework can be instantiated with different assumptions on $p(\theta_i|\phi)$ to deal elegantly and robustly with different kinds of statistical heterogeneity, as well as for principled and effective model personalisation. The main drawback of the shared $\theta$ modeling is that solving the variational inference problem for approximating the posterior $p(\theta|D_{1:N})$ is usually not decomposed into separable optimisation over individual clients, thus easily violating the FL constraints. To remedy this issue, either strong assumptions have to be made or r ad hoc strategies have to be employed to perform client-wise optimisation with aggregation.

We propose a novel hierarchical Bayesian approach to Federated Learning (FL), where our models reasonably describe the generative process of clients' local data via hierarchical Bayesian modeling: constituting random variables of local models for clients that are governed by a higher-level global variate. Interestingly, the variational inference in our Bayesian model leads to an optimisation problem whose block-coordinate descent solution becomes a distributed algorithm that is separable over clients and allows them not to reveal their own private data at all, thus fully compatible with FL. Beyond introducing novel modeling and derivations, we also offer convergence analysis showing that our block-coordinate FL algorithm converges to an (local) optimum of the objective at the rate of $O(1/\sqrt{t})$, the same rate as regular (centralised) SGD, as well as the generalisation error analysis where we prove that the test error of our model on unseen data is guaranteed to vanish as we increase the training data size, thus asymptotically optimal.

The hierarchical Bayesian models (NIW and Mixture - explained in more detail below) are a canonical formalisation for modeling hetergenous data, including personalisation. They offer a principled way to decompose shared (global) and local (personalised) knowledge and to learn both jointly. By making specific choices about the distributions involved (as, hierarchical Bayesian models can be explicitly configured to model different types of data heterogeneity. For example, when users group into cluster, the mixture model provides a good solution. The kind of transparent mapping between the algorithm and the nature of the data heterogeneity is not provided by other non-hierarchical methods.

**Bayesian FL: General Framework**

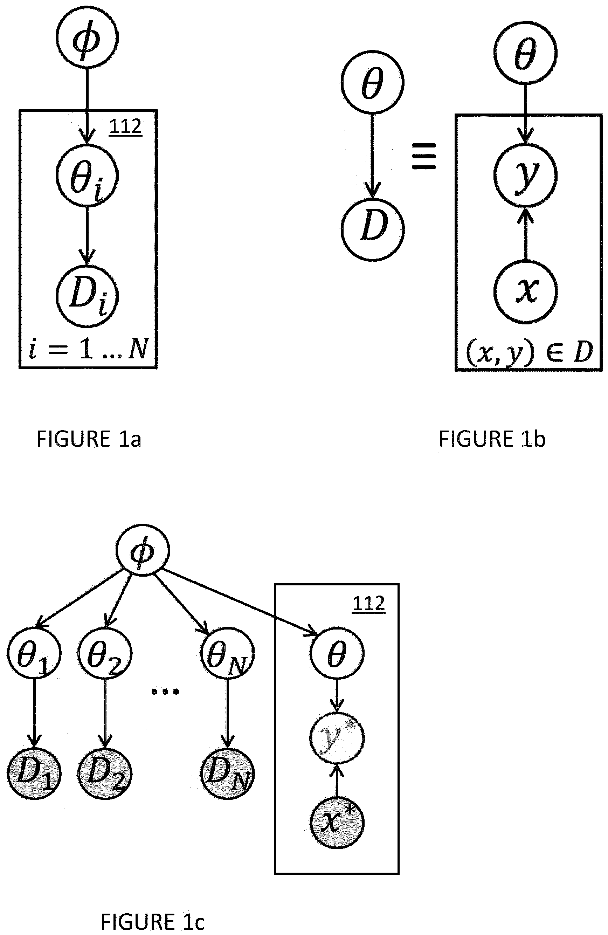

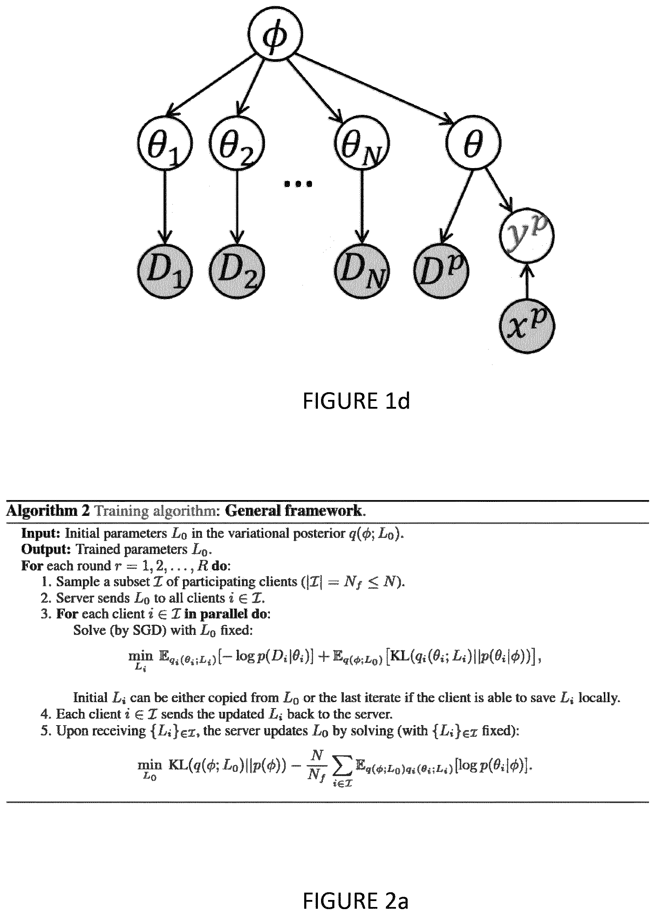

Figures 1a to 1d show graphical models of the general framework for Bayesian Federated Learning. Specifically, Figure 1a shows a plate view of independent and individually distributed (iid) client devices 112 each of which have a dataset $D_i$ and an local or individual random variable $\theta_i$. As explained below these local random variables are governed by a single random variable $\phi$. Figure 1b shows individual client data D with input images x given and only $p(y|x)$ modeled. Figures 1c shows global prediction at a client device 112 where x* is the test input and y* is the output to be inferred using the $\theta$ be the local model as a probalisitc inference problem. Figure 1d shows personalisation at a client device 112 using personal data $D_p$ before inference of the output $y^p$ using the test input $x^p$. In each of Figures 1c and 1d, the shaded nodes represent evidence , e.g. the individual data $D_i$ on a client device or the test input x*.

Figures 1a to 1d show two types of latent random variables, $\phi$ and $\{\theta_i\}_{i=1}^{N}$, where a latent variable is defined as a variable which is inferred from observed data using models. The higher-level variable $\phi$ determines the prior distribution of the individual client model (random variables) $\theta_i$. Since each clients prior distribution shares the same $\phi$, this parameter places the role of the *shared knowledge* across clients. It is exactly this principled decomposition of a global shared variable and local client-specific random variables that makes the hierarchical Bayesian framework a principled and empirically effective solution to both global model learning and personalised model learning.

Typically, each $\theta_i$, one for each local client i = 1, ...,N, will be deployed as the network parameters to client i's backbone. The variable $\phi$ can be viewed as a globally shared variable that is responsible for linking the individual client parameters $\theta_i$. In our modeling, we assume conditionally independent and identical priors, that is,

$$p(\theta_1, ..., \theta_N|\phi) = \prod_{i=1}^{N} p(\theta_i|\phi), \qquad (1)$$

where $p(\theta_i|\phi)$ shares the same conditional distribution $p(\theta|\phi)$. Thus the prior for the latent variables ($\phi$, $\{\theta_i\}_{i=1}^{N}$) is formed in a hierarchical manner as:

$$p(\phi, \theta_1, ..., \theta_N) = p(\phi) \prod_{i=1}^{N} p(\theta_i|\phi). \qquad (2)$$

So the prior distribution, which may be defined as a prior probability distribution of an uncertain quantity is the assumed probability distribution before some evidence is taken into account. The terms prior distribution and prior may be interchanged. The prior for each latent variable is fully specified by $p(\phi)$ and $p(\theta|\phi)$.

The local data for client $i$, denoted by $D_i$ is determined by the local client $\theta_i$ where the likelihood is:

$$p(D_i|\theta_i) = \prod_{(x,y)\in D_i} p(y|x, \theta_i), \qquad (3)$$

where $p(y|x, \theta_i)$ is a conventional neural network likelihood model (e.g., softmax likelihood/link after a neural network feed-forward for classification tasks).. Note that as per our definition (3) we do not deal with generative modeling of input images x, that is, input images are always given with only conditionals $p(y|x)$ modeled. Figure 1b illustrates this graphically for each individual client.

Given the local training data $D_1$, ..., $D_N$, we can in principle infer the posterior distribution of the latent variables. The posterior distribution may be defined as a type of conditional probability that results from updating the prior probability with information summarized by the likelihood via an application of Bayes' rule. The posterior distribution which is the conditional distribution of the latent variables given the local data may be written as:

$$p(\phi, \theta_{1:N}|D_{1:N}) \propto p(\phi) \prod_{i=1}^{N} p(\theta_i|\phi)p(D_i|\theta_i). \qquad (4)$$

In other words, the posterior distribution of $\phi$, $\theta_{1:N}$ given all the datasets is proportional to the product of the prior distribution for $\phi$ and each of the distributions for $\theta_i$ given $\phi$ and the distributions of each dataset given $\theta_i$. However, the posterior distribution is intractable in general, and we need to approximate the posterior inference. We adopt the variational inference, approximating the posterior (4) by a tractable density $q(\phi, \theta_1, ..., \theta_N; L)$ parameterized by $L$. We specifically consider a fully factorized density over all variables, that is,

$$q(\phi, \theta_1, ..., \theta_N; L) := q(\phi; L_0) \prod_{i=1}^{N} q_i(\theta_i; L_i), \qquad (5)$$

where the variational parameters $L$ consists of $L_0$ (parameters for $q(\phi)$) and $\{L_i\}_{i=1}^{N}$ 's (parameters for $q_i(\theta_i)$'s from individual clients). Note that although $\theta_i$'s are independent across clients under (5), they are differently modelled (emphasized by the subscript i in notation $q_i$), reflecting different posterior beliefs originating from different/heterogeneous local data $D_i$'s. We will show below in that this factorized variational density leads to fully separable block-coordinate ascent ELBO optimization which allows us to optimize $q(\phi)$ and $q_i(\theta_i)$'s without accessing the local data from other parties, leading to viable federated learning algorithms.

The main motivations of our hierarchical Bayesian modeling are two fold: i) Introducing client-wise different model parameters $\theta_i$ provides a way to deal with non-iid heterogeneous client data, as reflected in the posteriors $q_i(\theta_i)$, while we still take into account the shared knowledge during the posterior inference through the shared prior $p(\theta_i|\phi)$. Ii) As will be discussed in the next section, it enables a more principled learning algorithm by separating the two types of variables $\phi$ (shared) and $\theta_i$ (local).

**From Variational Inference to Federated Learning Algorithm**

Using the conventional/standard variational inference techniques, we can derive the ELBO objective function. The ELBO objective function may be termed the evidence lower bound objective function or the variational lower bound or negative variational free energy objective function. We denote the *negative* ELBO function by $\mathcal{L}$ (to be minimised over $L$) as follows:

$$\mathcal{L}(L) := \sum_{i=1}^{N} \left( \mathbb{E}_{q_i(\theta_i)}[-\log p(D_i|\theta_i)] + \mathbb{E}_{q(\phi)}[KL(q_i(\theta_i)||p(\theta_i|\phi))] \right) + KL(q(\phi)||p(\phi)), \qquad (6)$$

where $\mathbb{E}_{q_i(\theta_i)}$ is the evidence lower bound function, $q_i(\theta_i)$ is the posterior for each client device and its parameters $\theta_i$, $p(D_i|\theta_i)$ is the prior for the client device data $D_i$ given parameters $\theta_i$, N is the number of client devices, KL represents the Kulback-Leibler divergence, $p(\theta_i|\phi)$ is the the prior for the client parameters $\theta_i$ given $\phi$, $q(\phi)$ is the posterior for $\phi$ and $p(\phi)$ is the prior for $\phi$. In (6), we drop the dependency on $L$ in notation for simplicity. That is, $q(\phi)$ and $q_i(\theta_i)$ indicate $q(\phi;$

$L_0$) and $q_i(\theta_i; L_i)$, respectively.

The equation (6) could be optimised over the parameters ($L_0$), {$L_i$}) i.e. over $L$ jointly using centralised learning. However, as described below, we consider block-wise optimization, also known as *block-coordinate optimization,* specifically alternating two steps: (i) updating/optimizing all $L_i$'s $i = 1, ...,N$ while fixing $L_0$, and (ii) updating $L_0$ with all $L_i$'s fixed. That is, the objective functions for the two steps are as follows:

- Optimization over $L_1, ..., L_N$ ($L_0$ fixed).

$$\underset{\{L_i\}_{i=1}^N}{\mathrm{Min}} \quad \textstyle\sum_{i=1}^N \left(\mathbb{E}_{q_i(\theta_i)}[-\log p(D_i|\theta_i)] + \mathbb{E}_{q(\phi)}[KL(q_i(\theta_i)||p(\theta_i|\phi))]\right). \qquad (7)$$

In other words, in this step, the final term $KL(q(\phi)||p(\phi)$ of equation (6) may be considered to be deleted.
The objective function in (7) is completely separable over *i,* and we can optimize each summand independently as:

$$\underset{L_i}{\min} \; \mathcal{L}_i(L_i) := \mathbb{E}_{q_i(\theta_i;L_i)}[-\log p(D_i|\theta_i)] + \mathbb{E}_{q(\phi;L_0)}[KL(q_i(\theta_i;L_i)||p(\theta_i|\phi))]. \qquad (8)$$

So (8) constitutes local update/optimization for client *i.* Note that each client *i* needs to access its private data $D_i$ only, without data from others, thus this approach is fully compatible with FL. Once the first step of optimisation has been done, we can fix $L_i$ to do

- Optimization over $L_0$ ($L_1, ..., L_N$ fixed).

$$\underset{L_0}{\mathrm{Min}} \; \mathcal{L}_0(L_0) := KL(q(\phi;L_0)||p(\phi)) - \textstyle\sum_{i=1}^N \mathbb{E}_{q(\phi;L_0)q_i(\theta_i;L_i)}[\log p(\theta_i|\phi)]. \qquad (9)$$

In other words, in this step, the first term $\mathbb{E}_{q_i(\theta_i)}[-\log p(D_i|\theta_i)]$ of equation (6) may be considered to be deleted. This amounts to server update/optimization criteria with the latest updates $q_i(\theta_i; L_i)$'s from local clients being fixed. Remarkably, the server needs not access any local data at all, suitable for FL. This nice property originates from the independence assumption in our approximate posterior (5).

**Interpretation.** First, the server's loss function (9) tells us that the server needs to update the posterior $q(\phi; L_0)$ in such a way that (i) it puts mass on those $\phi$ that have high compatibility scores $\log p(\theta_i|\phi)$ with the current local models $\theta_i \sim q_i(\theta_i)$ for i = 1, ..., *n,* thus aiming to be aligned with local models, and (ii) it does not deviate much from the prior $p(\phi)$. Now, clients' loss function (8) indicates that each client i needs to minimize the class prediction error on its own data $D_i$ (first term), and at the same time, to stay close to the current global standard $\phi \sim q(\phi)$ by reducing the KL divergence from $p(\theta_i|\phi)$ (second term).

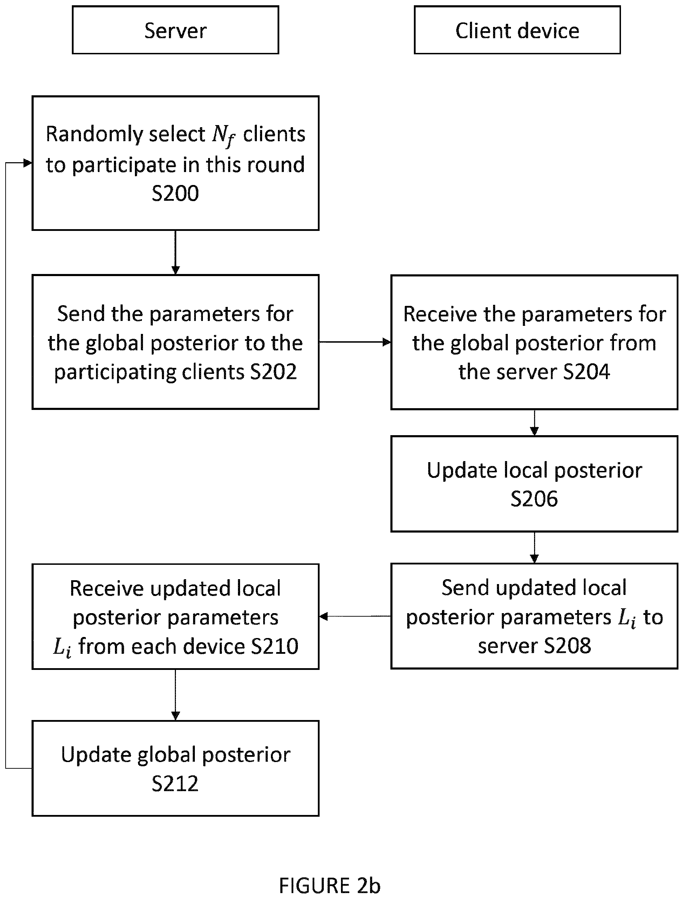

Figure 2a illustrates an algorithm which is suitable for implementing the general framework above. Figure 2b is a flowchart showing the key steps in each round r = 1, 2, ..., R of the method. In a first step S200 of each round r, the server selects a predetermined number $N_r (\le N)$ of client devices to participate in the round. In a next step S202, the server sends the parameters $L_0$ of the global posterior $q(\phi; L_0)$, to the participating client devices. These parameters are received at each client device at step S204.

In a next step S206, each local client device updates its local model $q_i(\theta_i; L_i)$ using an appropriate technique. For example, the optimization in equation (8) above may be applied, e.g.

$$\underset{L_i}{\min} E_{q_i(\theta_i;L_i)}[-\log p(D_i|\theta_i)] + E_{q(\phi;L_0)}[KL(q_i(\theta_i;L_i)||p(\theta_i|\phi))]$$

It is noted that during this optimisation, $L_0$ is fixed. The first part of the optimization $E_{qi(\theta_i;L_i)}$ is to fit data on the client device data. The second part of the optimisation $E_{q(\phi;L0)}$ uses a regularization to make sure that the updated $\theta_i$ stay close to the current global $\phi$. This second part may be termed a regularisation or penalty term and prevents the client device update from deviating far away from the current global estimate for the model.. The optimisation may be solved using stochastic gradient descent (SGD). Once the updating has been done at step S208, each local device *l* sends the updated local posterior parameters $L_i$ to the server.

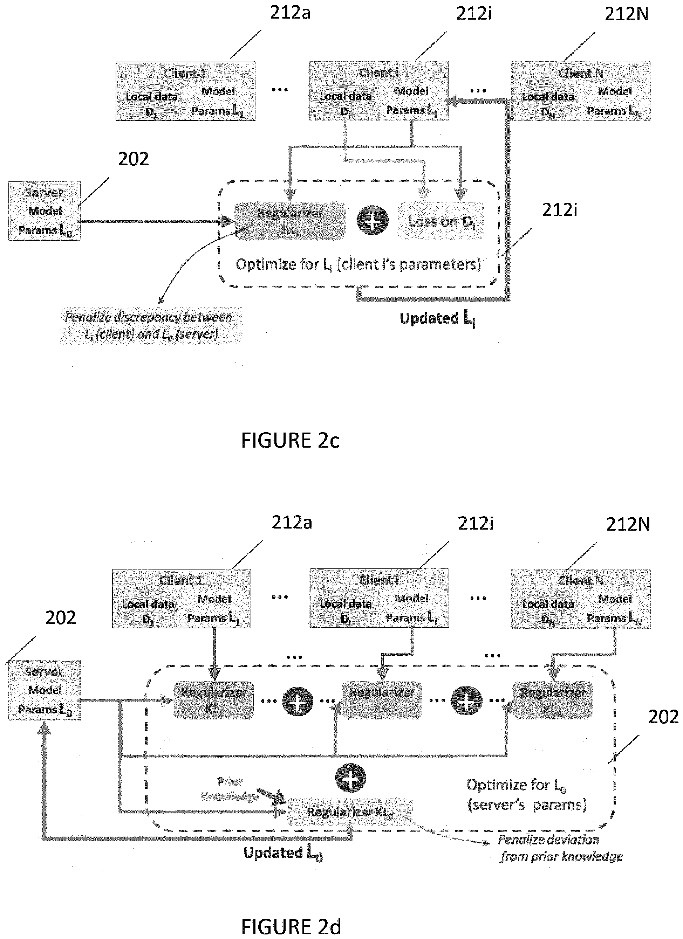

Figure 2c is a schematic representation of steps S204 and S206. There are a plurality of client devices 212a, 212i, 212N each of which has their own local data $D_i$ and local model parameters $L_i$. The client devices are connected to a server 202 which has a global model with global model parameters $L_0$. As shown, the global model parameters $L_0$ are sent to at least one client device 212i. The received global parameters are used to optimise the local model parameters $L_i$ using an optimisation which has two components. One component is a regulariser which receives as inputs the local model parameters $L_i$ and the global model parameters $L_0$ and is used to penalise discrepancy between these two inputs during the optimisation. The other component receives as inputs, local model parameters $L_i$ and the local data set $D_i$ and during the optimisation fits the local model parameters $L_i$ to the local data set, e.g. using a loss function.

The server receives each of the updated local posterior parameters $L_i$ from the client devices at step S210. The server then updates at step S212 the global posterior $q(\phi; L_0)$ by a suitable technique. For example, the optimization in equation (9) above may be applied, e.g.

$$\min_{L_0} \sum_i^{N_f} E_{q(\phi; L_0)}[KL(q_i(\theta_i; L_i)||p(\theta_i|\phi)] + KL(q(\phi; L_0)||p(\phi))$$

It is noted that during this optimisation, each $L_i$ is fixed. The first part $E_{q(\phi; L0)}$ considers the consensus over the client updates and in other words considers the compatibility between the global $\phi$ and the local models $\theta_i$. The second part is a regularization term to prevents the server update to $L_0$ from moving too far from the prior knowledge/information. In this way, any abrupt update cause by a spurious client update can potentially be avoided. The optimisation may be solved using stochastic gradient descent (SGD).

Figure 2d is a schematic representation of steps S210 and S212. As in Figure 2c, there are a plurality of client devices 212a, 212i, 212N each of which has their own local data $D_i$ and local model parameters $L_i$. The client devices are connected to the server 202 which has a global model with global model parameters $L_0$. As shown, the local model parameters $L_1, L_i,..., L_N$ are sent to the server 202. The received local model parameters are used to optimise the global parameters $L_0$ using an optimisation which has two components. One component is a regulariser which receives as inputs the prior knowledge $\phi$ and the global model parameters $L_0$ and is used to penalise discrepancy between these two inputs during the optimisation. The other component is a sum of separate regularisers for each of the client devices and each regulariser prevents the updated global model parameters $L_0$ from drifting too far from each of the local model parameters $L_i$.

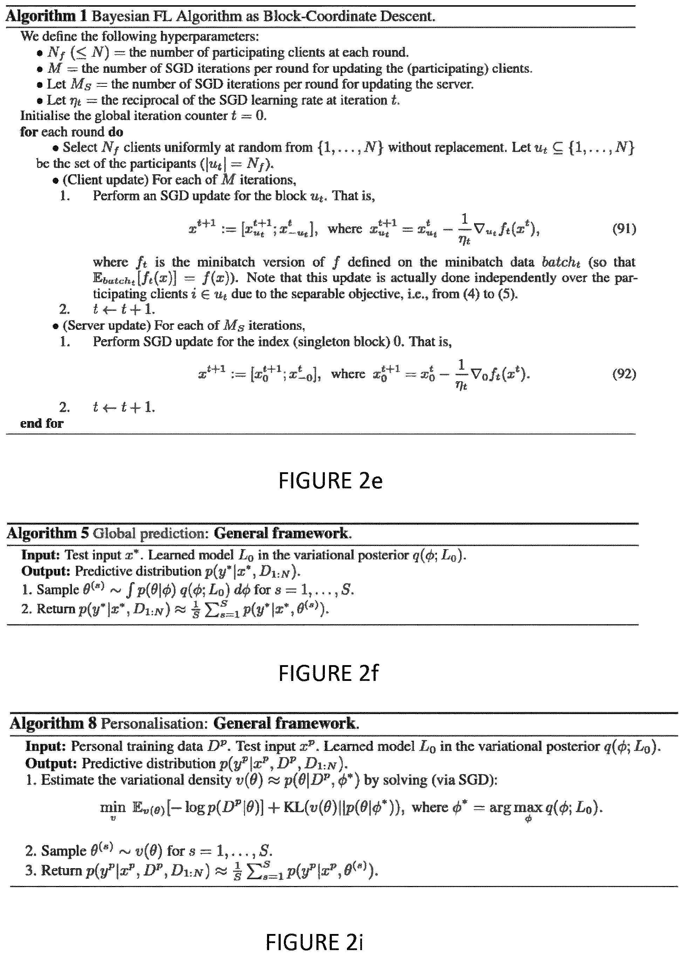

The round is then complete, and the next round can begin with the random selection at step S200 and repeat all other steps. Once all rounds are complete, the trained parameters $L_0$ are output. Figure 2e is example pseudo-code which gives more detail of the overall Bayesian Federated Learning Algorithm as Block-Coordinate descent and in particular uses SGD as described above. In summary, the method above tackles communication constraints and privacy in federated learning by developing a hierarchical Bayesian model for which variational inference with block-coordinate descent naturally decomposes over the client device and server posteriors (e.g. target parameters $L_0$ and $L_i$ to be learned.

**Formalisation of Global Prediction and Personalisation Tasks**

Returning to Figures 1c and 1d, as illustrated, there are two important tasks in FL: *global prediction* and *personalisation.* Global prediction is to judge how well the trained FL model performs on novel test data points sampled from a domain/distribution which is possibly different from that of training data. Personalisation is the task of adapting the trained FL model on a specific dataset called personalised data. Specifically, we are given a training split of the personalized data to update the FL-trained model. Then we measure the performance of the adapted model on the test split that conforms to the same distribution as the training split.

In the existing non-Bayesian FL approaches, these tasks are mostly handled straightforwardly since we have a single point estimate of the global model obtained from training. For global prediction, they just feed the test points forward through the global model; for personalisation, they usually finetune the global model with the personalised training data, and test it on the test split. Thus, previous FL approaches may have issues in dealing with non-iid client data in a principled manner, often resorting to ad-hoc treatments. In our Bayesian treatment/model, these two tasks can be formally defined as Bayesian inference problems in a more principled way. Our hierarchical framework introduces client-wise different model parameters $\theta_i$ to deal with non-iid heterogeneous client data more flexibly, reflected in the different client-wise posteriors $q_i(\theta_i)$.

**Global prediction.** The task is to predict the class label of a novel test input x* which may or may not originate from the same distributions/domains as the training data $D_1, ...D_N$. It can be turned into a probabilistic inference problem $p(y^*|x^*, D_1, ..., D_N)$. Under our Bayesian model, we let $\theta$ be the local model that generates the output y* given x*. See Fig. 1c for the graphical model diagram. Exploiting conditional independence, we can derive the predictive probability as follows from Fig. 1c:

$$p(y^*|x^*, D_1, ..., D_N) = \iint p(y^*|x^*, \theta)\ p(\theta|\phi)\ p(\phi|D_1, ..., D_N)\ d\theta d\phi \qquad (10)$$

$$\approx \iint p(y^*|x^*, \theta)\ p(\theta|\phi)\ q(\phi)\ d\theta d\phi \qquad (11)$$

$$= \int p(y^*|x^*, \theta)\ \left(\int p(\theta|\phi)\ q(\phi)d\phi\right)\ d\theta, \qquad (12)$$

where in (11) we use our variational approximate posterior $q(\phi)$. In our specific model choice of Normal-Inverse-Wishart (see below for more details), the inner integral in (12) can be succinctly written as a closed form (multivariate Student-t). Alternatively, the inner integral can be approximated (e.g. using a Monte-Carlo estimate).

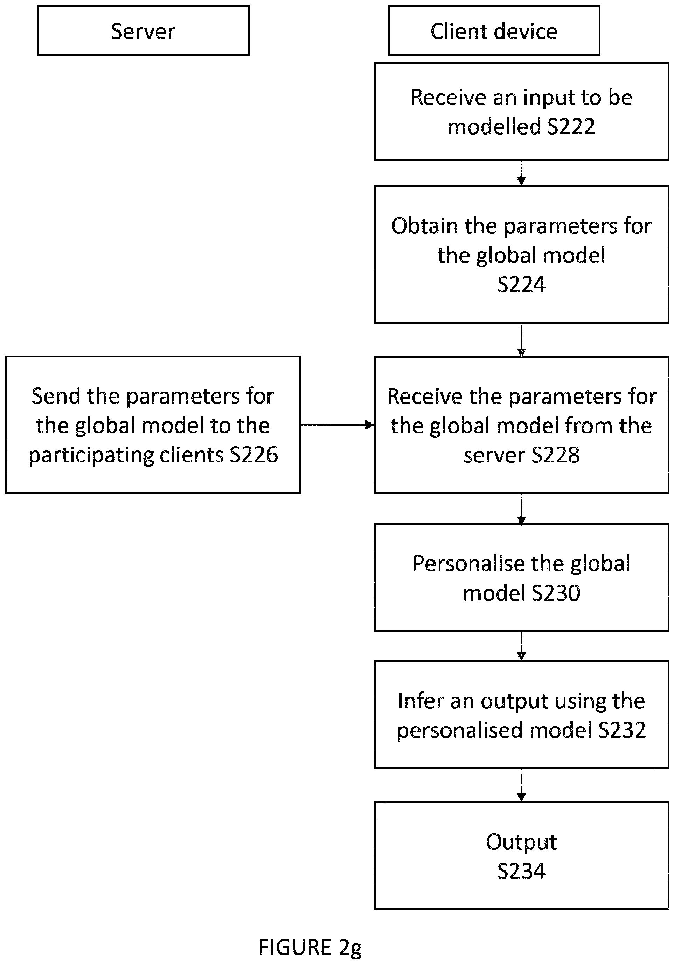

Figure 2f gives an example pseudo code which is sutiable for implementing the general global prediction framework. Figure 2g is a flowchart summarising the steps of Figure 2f. In a first step S222, the client device receives an input x*, for example an input image to be classified or edited (for example altered to include the classification). The client device also obtains the parameters for the global model at step S224. The current global model could be obtained from the server as shown at step S226, the server sends the parameters for the global model to the participating client(s). As explained above, the learned model $L_0$ is used in the variational posterior $q(\phi, L_0)$. This global model is received from the server at step S228 at the client device. These steps to obtain the global model could be done before receiving the input or could be triggered by receipt of the input.

Before using the received global model, the local device then personalises the received global model at step S230. One way as shown in the pseudocode of Figure 2f is to use Monte Carlo sampling with S being the number of Monte Carlo samples). At step S232, the client device infers the output y* (e.g. a class label) using the updated personalised model. For example, when using sampling to personalise the model, the output may be generated using:

$$p(y^*|x^*, D_1, ..., D_N) \approx \frac{1}{S} \sum_{s=1}^{S} p\left(y^*\big|x^*, \theta^{(s)}\right)$$

where $\theta^{(s)} \approx \int p(\theta|\phi)\ q(\phi; L_o)\ d\phi$.

In a final step S230, there is an output. The output could be for example a class label, an edited image, e.g. an image which has been edited to include the class label or to otherwise alter the image based on the class label.

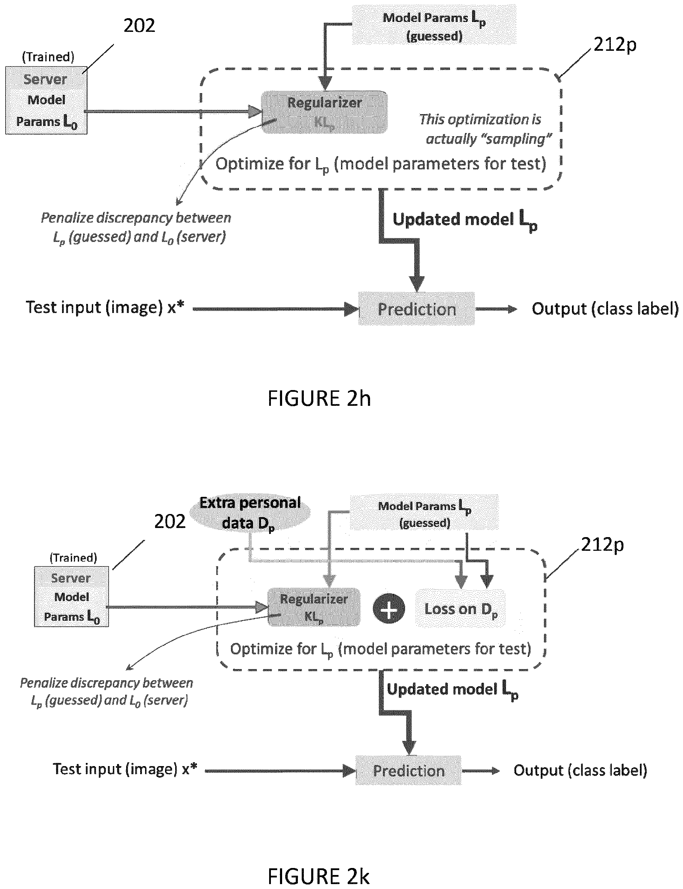

Figure 2h is a schematic representation of the method of Figures 2f and 2g. The server 202 sends the parameters for the global model $L_0$ to the participating client device 212p. An updated local model with local model parameters $L_p$ is generated at the client device 212p. As indicated, one technique for doing this when there is no local client data is to optimiising the global model parameters using sampling. The optimisation includes a regulariser (regularisation penalty) similar to the ones which are used during the training framework. In this case, the regulariser penalises the discrepancy between the "guess" for the local model parameters $L_p$ and the received global model parameters $L_0$. Once the local model is updated, it can then be used to predict the output y based on the input x..

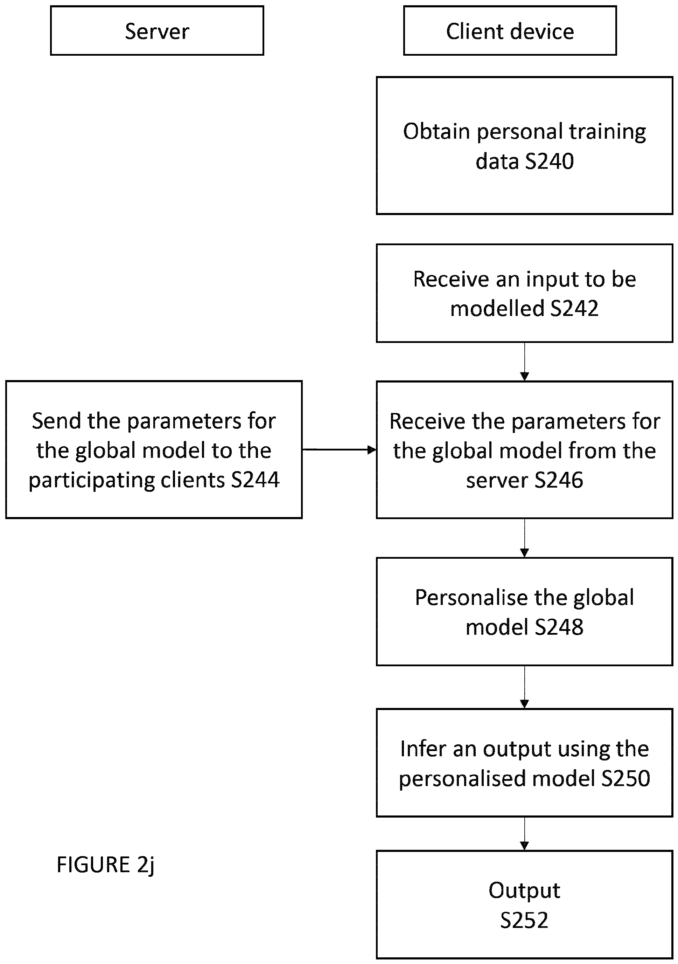

**Personalisationformally** refers to the problem of learning a prediction model $\hat{p}(y|x)$ given an unseen (personal) training dataset $D^p$ that comes from some unknown distribution $p^p(x, y)$, so that the personalised model $\hat{p}$ performs well on novel (in-distribution) test points $(x^p, y^p) \sim p^p(x, y)$. Evidently we need to exploit (and benefit from) the model that we trained during the federated learning stage. To this end many existing approaches simply resort to *finetuning,* that is, training the network on $D^p$ with the FL-trained model as an initial iterate. However, a potential issue with finetuning is the lack of a solid principle on how to balance the initial FL-trained model and personal data fitting to avoid both underfitting the parameters for the global model to the participating client(s). and overfitting. Figure 2i gives an example pseudo code which is sutiable for implementing the general personalisation framework. Figure 2j is a flowchart summarising the steps of Figure 2i. In our Bayesian framework, the personalisation can be seen as another posterior inference problem with *additional evidence* given by the personal training data $D^p$.

In a first step S240, this personal training data $D^p$ is obtained by any suitable technique, e.g. by separating a portion of the client data which is not used in the general training described above. In a next step S242 (which could be simultaneous with or before the previous steps), the client device receives an input $x^p$, for example an input image to be classified or edited (for example altered to include the classification). As explained above in the global prediction, the client device then obtains the global model parameters, for example as shown in step S244, the server sends the parameters for the global model to the participating client(s). As explained above, the learned model $L_0$ is used in the variational posterior $q(\phi, L_0)$. This global model is received from the server at step S246 at the client device.

Then the prediction on a test point $x^p$ amounts to inferring the posterior predictive distribution,

$$p(y^p | x^p, D^p, D_1, ..., D_N) = \int p(y^p | x^p, \theta) \ p(\theta | D^p, D_1, ..., D_N) \ d\theta. \tag{13}$$

So, it boils down to the task of posterior inference $p(\theta | D^p, D_1, ..., D_N)$ given both the personal data $D^p$ and the FL training data $D_1, ..., D_N$. Under our hierarchical model, by exploiting conditional independence from the graphical model shown in Figure 1d, we can link the posterior to our FL-trained $q(\phi)$ as follows:

$$p(\theta | D^p, D_1, ..., D_N) = \int p(\theta | D^p, \phi) \ p(\phi | D_1, ..., D_N) \ d\phi \tag{14}$$

$$\approx \int p(\theta | D^p, \phi) \ q(\phi) \ d\phi \tag{15}$$

$$\approx p(\theta | D^p, \phi^*), \tag{16}$$

where in (14) we disregard the impact of $D^p$ on the higher-level given the joint evidence, $p(\phi | D^p, D_1, ..., D_N) \approx p(\phi | D_1, ..., D_N)$ due to the dominance of $D_{1:N}$ compared to smaller $D^p$.. In (16) we approximate the integral by mode evaluation at the mode $\phi^*$ of $q(\phi)$, which can be reasonable for spiky $q(\phi)$ in our two modeling choices to be discussed below. Since dealing with $p(\theta | D^p, \phi^*)$ involves the difficult marginalisation $p(D^p | \phi^*) = \int p(D^p | \theta) p(\theta | \phi^*) d\theta$, we adopt variational inference, introducing a tractable variational distribution $v(\theta) \approx p(\theta | D^p, \phi^*)$. Following the usual variational inference (VI) derivations, we have the negative ELBO objective function (for personalisation) as follows:

$$\min_{v} \ \mathbb{E}_{v(\theta)}[-\log p(D^p | \theta)] + KL(v(\theta) || p(\theta | \phi^*)). \tag{17}$$

Thus, at step S248, we can personalise the global model, using the optimisation above. Once we have the optimised model $v$, at step S250, we infer an output. One way as shown in the pseudocode of Figure 2i is to use Monte Carlo sampling with S being the number of Monte Carlo samples).Our predictive distribution becomes:

$$p(y^p | x^p, D^p, D_1, ..., D_N) \approx \frac{1}{S} \sum_{s=1}^{S} p(y^p | x^p, \theta^{(s)}), \ \ where \ \ \theta^{(s)} \sim v(\theta), \tag{18}$$

which simply requires feed-forwarding test input $x^p$ through the sampled networks $\theta^{(s)}$ and averaging.

In a final step S252, there is an output. The output could be for example a class label, an edited image, e.g. to include the class label or to otherwise alter the image based on the class label.

Figure 2k is a schematic representation of the method of Figures 2i and 2j. The server 202 sends the parameters for the global model $L_0$ to the participating client device 212p. An updated local model with local model parameters $L_p$ is generated at the client device 212p. In this case, there is extra personal data $D_p$ which can be used to personalise the model. The optimisation includes a regulariser (regularisation penalty) similar to the ones which are used during the training framework. In this case, the regulariser penalises the discrepancy between the "guess" for the local model parameters $L_p$ and the received global model parameters $L_0$. The optimisation also includes a term (e.g. a loss function) which fits the local model parameters $L_p$ to the extra personal data $D_p$, for example using the tractable variational distribution $v(\theta)$ as described above. Once the local model is updated, it can then be used to predict the output y based on the input x..

Thus far, we have discussed a general framework for our Bayesian FL, deriving how the variational inference for our general Bayesian model fits gracefully in the FL framework. The next step is to define specific distribution families for the priors ($p(\phi)$, $p(\theta_i | \phi)$) and posteriors ($q(\phi)$, $q(\theta_i)$). We propose two different model choices that we find the most interesting:

- **Normal-Inverse-Wishart** (NIW) model: Good for general models, admits close forms in most cases, computationally no extra cost required.
- **Mixture model:** Good for more drastic distribution/domain shift, heterogeneity, non-iid data.

**Normal-Inverse-Wishart Model.** We define the prior as a conjugate form of Gaussian and Normal-Inverse-Wishart. More specifically, each local client has Gaussian prior $p(\theta_i | \phi)) = \mathcal{N}(\theta_i; \mu, \Sigma)$ where $\mathcal{N}$ is a multivariate normal distribution, $\mu$ is the mean and $\Sigma$ is the covariance matrix , and the global latent variable $\phi$ is distributed as a conjugate prior which is Normal-inverse-Wishart (NIW), with $\phi = (\mu, \Sigma)$:

$$p(\phi) = \mathcal{NIW}(\mu, \Sigma; \Lambda) = \mathcal{N}(\mu; \mu_0, \lambda_0^{-1}\Sigma) \cdot \mathcal{IW}(\Sigma; \Sigma_0, v_0), \qquad (19)$$

$$p(\theta_i|\phi) = \mathcal{N}(\theta_i; \mu, \Sigma), \quad i = 1, \dots, N, \qquad (20)$$

where $\Lambda = \{\mu_0, \Sigma_0, \lambda_0, v_0\}$ is the parameters of the NIW Although $\Lambda$ can be learned via data marginal likelihood maximisation (e.g., empirical Bayes), but for simplicity we leave it fixed as: $\mu_0 = 0$, $\Sigma_0 = I$, $\lambda_0 = 1$, and $v_0 = d + 2$ where d is the number of parameters (or dimension) in $\theta_i$ or $\mu$. Note that we set the degree of freedom (d.o.f.) $v_0$ for the inverse-Wishart as the smallest integer value that leads to the least informative prior with finite mean value. This choice ensures that the mean of $\Sigma$ equals $I$, and $\mu$ is distributed as zero-mean Gaussian with covariance $\Sigma$.

Next, our choice of the variational density family for $q(\phi)$ is the NIW, not just because it is the most popular parametric family for a pair of mean vector and covariance matrix $\phi = (\mu, \Sigma)$, but it can also admit closed-form expressions in the ELBO function due to the conjugacy as derived below.

$$q(\phi) := \mathcal{NIW}(\phi; \{m_0, V_0, l_0, n_0\}) = \mathcal{N}(\mu; m_0, l_0^{-1}\Sigma) \cdot \mathcal{IW}(\Sigma; V_0, n_0). \qquad (21)$$

where $m_0$ is a parameter based on the mean, i.e. $\mu^* = m_0$ and $V_0$ is a parameter based on the covariance matrix and defined by

$$\sum\nolimits^* = \frac{V_0}{n_0 + d + 2}$$

Although the scalar parameters $l_0, n_0$ can be optimized together with $m_0$, $V_0$, their impact is less influential and we find that they make the ELBO optimization a little bit cumbersome. So we aim to fix $l_0, n_0$ with some near-optimal values by exploiting the conjugacy of the NIW prior-posterior under the Gaussian likelihood. For each $\theta_i$, we pretend that we have instance-wise representative estimates $\theta_i(x, y)$, one for each $(x,y) \in D_i$. For instance, one can view $\theta_i(x, y)$ as the network parameters optimized with the single training instance (x,y). Then this amounts to observing $|D|$ ( $= \sum_{i=1}^{N} |D_i|$ ) Gaussian samples $\theta_i(x, y) \sim \mathcal{N}(\theta_i; \mu, \Sigma)$ for $(x,y) \sim D_i$ and i = 1, ..., N. Then applying the NIW conjugacy, the posterior is the NIW with $l_0 = \lambda_0 + |D| = |D| + 1$ and $n_0 = v_0 + |D| = |D| + d + 2$. This gives us good approximate estimates for the optimal $l_0$, $n_0$, and we fix them throughout the variational optimization. Note that this is only heuristics for estimating the scalar parameters $l_0$, $n_0$ quickly, and the parameters $m_0$, $V_0$ are determined by the principled ELBO optimizationas variational parameters $L_0 = \{m_0, V_0\}$. Since the dimension d is large (the number of neural network parameters), we restrict $V_0$ to be diagonal for computational tractability.

The density family for $q_i(\theta_i)$'s can be a Gaussian, but we find that it is computationally more attractive and numerically more stable to adopt the mixture of two spiky Gaussians that leads to the MC-Dropout, for example as described in "Dropout as a Bayesian Approximation: Representing Model Uncertainty in Deep Learning" by Gal et al published in International Conference on Machine Learning 2016. That is,

$$q_i(\theta_i) = \prod_l \left( p \cdot \mathcal{N}(\theta_i[l]; m_i[l], \epsilon^2 I) + (1 - p) \cdot \mathcal{N}(\theta_i[l]; 0, \epsilon^2 I) \right), \qquad (22)$$

where $m_i$ is the only variational parameter and is based on the mean ($L_i = \{m_i\}$), $\cdot [l]$ indicates the specific column/layer in neural network parameters where $l$ goes over layers and columns of weight matrices, $p$ is the (user-specified) hyperparameter where 1 - $p$ corresponds to the dropout probability, and $\varepsilon$ is a tiny constant (e.g., $10^{-6}$) that makes two Gaussians spiky, close to the delta function. Now we provide more detailed derivations for the client optimization and server optimization.

**Detailed Derivations for NIW Model**

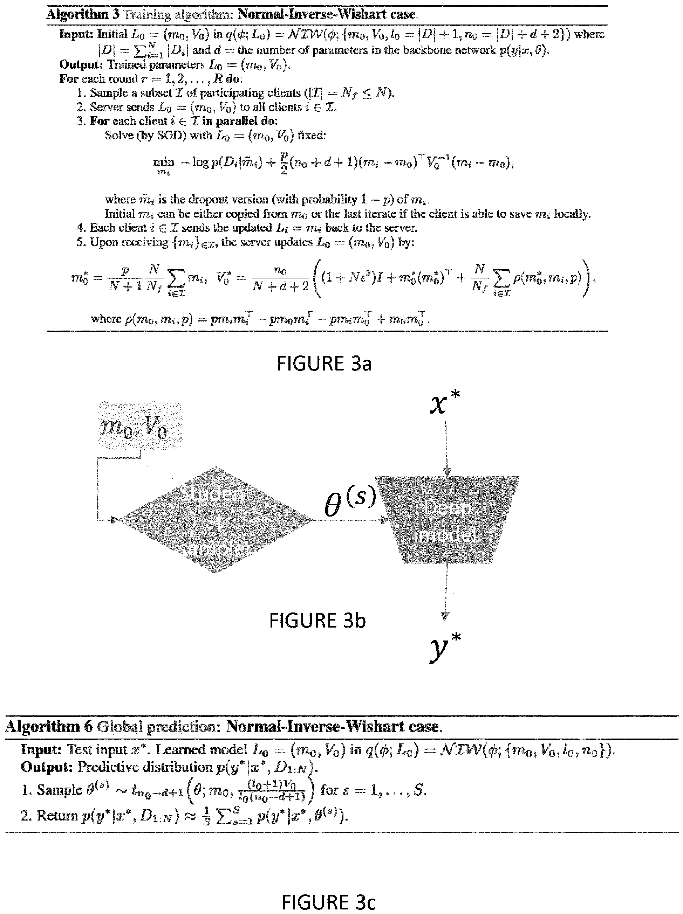

Figure 3a is an example of pseudo code which is suitable for implementing a training algorithm using the normal-inverse-Wishart case described above. The general steps of the training algorithm are the same as Figure 2b. In other words, in a first step S200 of each round r, the server selects a predetermined number $N_f (\leq N)$ of client devices to participate in the round. In a next step S202, the server sends the parameters $L_0$ of the global posterior $q(\phi; L_0)$, to the participating client devices. These parameters are received at each client device at step S204.

**Client update.** In a next step S206, each local client device updates its local posterior $q_i(\theta_i; L_i)$ using an appropriate technique. In this example, we apply the general client update optimisation (8). We note that $q(\phi)$ is spiky since since our pre-estimated NIW parameters $l_0$ and $n_0$ are large (as the entire training data size IDI is added to the initial prior parameters). Due to the spiky $q(\phi)$, we can accurately approximate the second term in (8) as:

$$\mathbb{E}_{q(\phi)}[KL(q_i(\theta_i)||p(\theta_i|\phi))] \approx KL(q_i(\theta_i)||p(\theta_i|\phi^*)), \qquad (23)$$

where $\phi^* = (\mu^*, \Sigma^*)$ is the mode of $q(\phi)$, which has closed forms for the NIW distribution:

$$\mu^* = m_0, \qquad \Sigma^* = \frac{V_0}{n_0+d+1}. \qquad (24)$$

In (23) we have the KL divergence between a mixture of Gaussians (22) and a Gaussian (20). We apply the approximation $KL(\sum_i \alpha_i \mathcal{N}_i||\mathcal{N}) \approx \sum_i \alpha_i KL(\mathcal{N}_i||\mathcal{N})$ as well as the reparameterised sampling for (22), which allows us to rewrite (8) as:

$$\min_{m_i} \mathcal{L}_i(m_i) := -\log p(D_i|\tilde{m}_i) + \frac{p}{2}(n_0 + d + 1)(m_i - m_0)^{\mathsf{T}} V_0^{-1}(m_i - m_0), \qquad (25)$$

where $\tilde{m}_i$ is the dropout version of $m_i$, i.e., a reparameterized sample from (22). This optimisation in (25) is then solved at step S206 to update $\mathcal{L}_i$ for each client device. Also, we use a minibatch version of the first term for a tractable SGD update, which amounts to replacing the first term by the batch average $\mathbb{E}_{(x,y)\sim Batch}[-\log p(y|x, \tilde{m}_i)]$ while down-weighing the second term by the factor of $1/|D_i|$. Note that $m_0$ and $V_0$ are fixed during the optimisation. Interestingly (25) generalises the famous Fed-Avg and Fed-Prox: With $p = 1$ (i.e., no dropout) and setting $V_0 = \alpha I$ for some constant $\alpha$, we see that (25) reduces to the client update formula for Fed-Prox where constant $\alpha$ controls the impact of the proximal term. In a next step S208, each local client device sends its updated local parameters $\mathcal{L}_i = m_i$ to the server.

**Server update.** The server receives each of the updated local posterior parameters $L_i$ from the client devices at step S210. The general server optimisation (9) involves two terms, both of which admit closed-form expressions thanks to the conjugacy. Furthermore, we show that the optimal solution $(m_0, V_0)$ of (9) has an analytic form. First, the KL term in (9) is decomposed as:

$$KL(\mathcal{IW}(\Sigma; V_0, n_0)||\mathcal{IW}(\Sigma; \Sigma_0, v_0)) + \mathbb{E}_{\mathcal{IW}(\Sigma; V_0, n_0)}[KL(\mathcal{N}(\mu; m_0, l_0^{-1}\Sigma)||\mathcal{N}(\mu; \mu_0, \lambda_0^{-1}\Sigma))] \qquad (26)$$

By some algebra, (26) becomes identical to the following, up to a constant, removing those terms that are not dependent on $m_0, V_0$:

$$\frac{1}{2}(n_0 Tr(\Sigma_0 V_0^{-1}) + v_0 \log|V_0| + \lambda_0 n_0(\mu_0 - m_0)^{\mathsf{T}} V_0^{-1}(\mu_0 - m_0)). \qquad (27)$$

Next, the second term of (9) also admits a closed form as follows:

$$-\mathbb{E}_{q(\phi)q_i(\theta_i)}[\log p(\theta_i|\phi)] = \frac{n_0}{2}(pm_i^{\mathsf{T}} V_0^{-1} m_i - pm_0^{\mathsf{T}} V_0^{-1} m_i - pm_i^{\mathsf{T}} V_0^{-1} m_0 + m_0^{\mathsf{T}} V_0^{-1} m_0$$

$$+ \frac{1}{n_0}\log|V_0| + \epsilon^2 Tr(V_0^{-1})) + const. \qquad (28)$$

That is, server's loss function $\mathcal{L}_0$ is the sum of (27) and (28). We can take the gradients of the loss with respect to $m_0$, $V_0$ as follows (also plugging $\mu_0 = 0$, $\Sigma_0 = I$, $\lambda_0 = 1$, $v_0 = d + 2$):

$$\frac{\partial \mathcal{L}_0}{\partial m_0} = n_0 V_0^{-1}((N+1)m_0 - p\sum_{i=1}^N m_i), \tag{29}$$

$$\frac{\partial \mathcal{L}_0}{\partial V_0^{-1}} = \frac{1}{2}(n_0(1 + N\epsilon^2)I - (N+d+2)V_0 + n_0 m_0 m_0^\mathsf{T} + n_0 \sum_{i=1}^N \rho(m_0, m_i, p)), \tag{30}$$

*where* $\rho(m_0, m_i, p) = pm_i m_i^\mathsf{T} - pm_0 m_i^\mathsf{T} - pm_i m_0^\mathsf{T} + m_0 m_0^\mathsf{T}$.

We set the gradients to zero and solve for them, which yields the optimal solution:

$$m_0^* = \frac{p}{N+1}\sum_{i=1}^N m_i, \tag{31}$$

$$V_0^* = \frac{n_0}{N+d+2}((1 + N\epsilon^2)I + m_0^*(m_0^*)^\mathsf{T} + \sum_{i=1}^N \rho(m_0^*, m_i, p)). \tag{32}$$

Note that $m_i$'s are fixed from clients' latest variational parameters. This optimisation in (31) and (32) is then solved at step S212 to update $\mathcal{L}_0$ at the server.

Since $D\rho(m_0^*, m_i, p = 1) = (m_i - m_0^*)(m_i - m_0^*)^\mathsf{T}$ when $p = 1$, we can see that $V_0^*$ in (32) essentially estimates the sample scatter matrix with (N + 1) samples, namely clients' $m_i$'s and server's prior $\mu_0 = 0$, measuring how much they deviate from the center $m_0^*$. It is known that the dropout can help regularise the model and lead to better generalisation, and with $p < 1$ our (31-32) forms a principled optimal solution.

Returning to Figure 2b, once the round is completed, the next round can begin with the random selection at step S200 and repeat all other steps. In this example, the trained parameters $L_0 = (m_0, V_0)$ are output. The input is an initial $L_0 = (m_0, V_0)$ in $q(\phi, L_0) = \mathcal{NIW}(\phi; \{m_0, V_0, l_0 = |D| + 1, n_0 = |D| + d + 2\})$ where $D = \sum_{i=1}^N |D_i|$ and d is the number of parameters in the backbone network p(y|x, θ).

**Global prediction.** Returning to Figure 1c an important task in FL is *global prediction.* Figure 3b illustrates schematically how global prediction may be applied in the present example. Figure 3c is example pseudo code to implement the global prediction. The inner integral of (12) of the general predictive distribution becomes the multivariate Student-t distribution:

$$\int p(\theta|\phi) \ q(\phi) \ d\phi = \int \mathcal{N}(\theta; \mu, \Sigma) \cdot \mathcal{NIW}(\phi; \{m_0, V_0, l_0, n_0\}) \ d\phi \tag{33}$$

$$= t_{n_0 - d + 1}(\theta; m_0, \frac{(l_0 + 1)V_0}{l_0(n_0 - d + 1)}), \tag{34}$$

where $t_v(a, B)$ is the multivariate Student-t with location $a$, scale matrix $b$, and d.o.f. $v$. Then the predictive distribution for a new test input x* can be estimated as:

$$p(y^*|x^*, D_1, \ldots, D_N) = \int p(y^*|x^*, \theta) \cdot t_{n_0 - d + 1}(\theta; m_0, \frac{(l_0 + 1)V_0}{l_0(n_0 - d + 1)}) \ d\theta \tag{35}$$

$$\approx \frac{1}{S}\sum_{s=1}^S p(y^*|x^*, \theta^{(s)}), \quad where \quad \theta^{(s)} \sim t_{n_0 - d + 1}(\theta; m_0, \frac{(l_0 + 1)V_0}{l_0(n_0 - d + 1)}). \tag{36}$$

where as shown in Figure 3b, the inputs are the global model parameters $L_0 = (m_0, V_0)$ from the FL trained model. These are input to the student-t sampler $t_v(a,B)$ to give an approximation $\theta^{(s)}$ for the global parameters $\theta$. Normally S=1 in practise. These approximate parameters are used in the deep model to predict the output y* for example a class label for the test input.

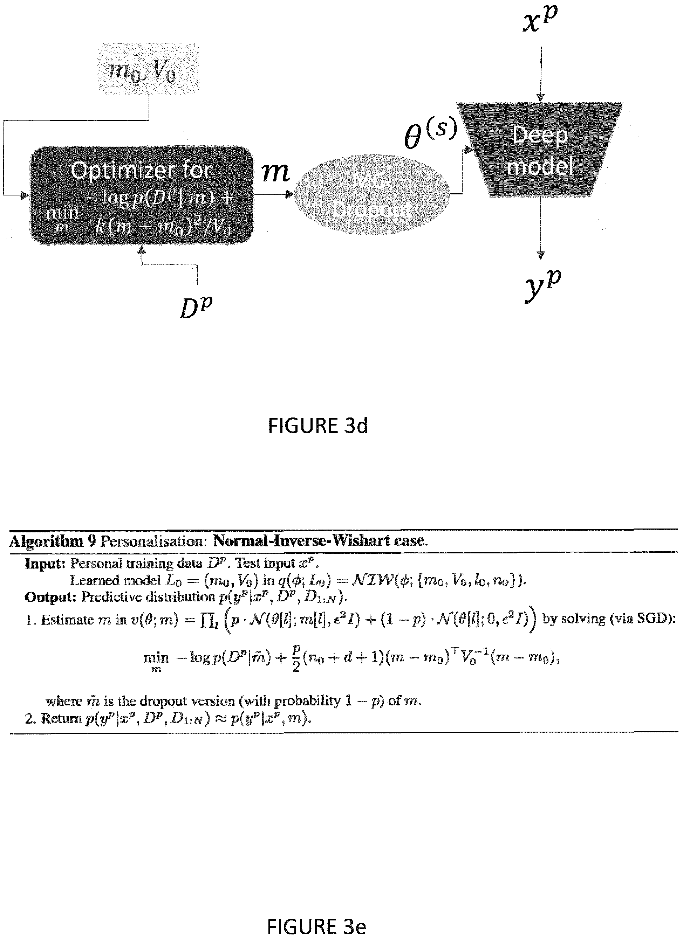

**Personalisation.** Returning to Figure 1d an important task in FL is *personalisation*. Figure 3d illustrates schematically how personalisation may be applied in the present example. Figure 3e is example pseudo code for implementing personalisation. With the given personalisation training data $D^p$, we follow the general framework in (17) to find $v(\theta) \approx p(\theta|D^p, \phi^*)$ in a variational way, where $\phi^*$ obtained from (24). For the density family for $v(\theta)$ we adopt the same spiky mixture form as (22), which leads to the MC-dropout-like learning objective similar to (25). Once $v$ is trained, our predictive distribution follows the MC sampling (18). Thus, looking at Figure 3c, we have the deep model:

$$p(y^p|x^p, D^p, D_{1:N})$$

where $y^P$ is the predicted output given the input $x^p$, the personalized data $D^p$ and all data sets $D_{1:N}$. This can be approximated as

$$\frac{1}{S}\sum_{s=1}^{S} p\left(y^p|x^p, \theta^{(s)}\right)$$

where $\theta^{(s)}$ are the parameters from the MC-dropout and are defined by:

$$\theta^{(s)} \sim v(\theta; m)$$

where m is obtained from an optimizer which optimizes the equation below for the input global model parameters $L_0 = (m_0, V_0)$

$$\min_{m} -\log p(D_i|\widetilde{m}_i) + \frac{p}{2}(n_0 + d + 1)(m_i - m_0)^{\top} V_0^{-1}(m_i - m_0)$$

and

$$v(\theta) = \prod_l (p \cdot \mathcal{N}(\theta_i[l]; m_i[l], \epsilon^2 I) + (1-p) \cdot \mathcal{N}(\theta_i[l]; 0, \epsilon^2 I))$$

**Mixture Model.** Previously, the NIW prior model expresses our prior belief where each client i a priori gets its own network parameters $\theta_i$ as a Gaussian-perturbed version of the shared parameters $\mu$ from the server, namely $\theta_i|\phi \sim \mathcal{N}(\mu, \Sigma)$, as in (20). This is intuitively appealing, but not optimal for capturing more drastic diversity or heterogeneity of local data distributions across clients. In the situations where clients' local data distributions, as well as their domains and class label semantics, are highly heterogeneous (possibly even set up for adversarial purpose), it would be more reasonable to consider *multiple different prototypes* for the network parameters, diverse enough to cover the heterogeneity in data distributions across clients. Motivated from this idea, we introduce a mixture prior model as follows.
First we consider that there are K network parameters (prototypes) that broadly cover the client's data distributions. They are denoted as high-level latent variables, $\phi = \{\mu_1, ..., \mu_K\}$ We consider:

$$p(\phi) = \prod_{j=1}^{K} \mathcal{N}(\mu_j; 0, I) \qquad (37)$$

where $\mathcal{N}$ is a multivariate normal distribution, $\mu_j$ is the global random variable (also termed mean) for each network K. We here note some clear distinction from the NIW prior. Whereas the NIW prior (19) only controls the mean $\mu$ and covariance $\Sigma$ in the Gaussian from which local models $\theta_j$ can take, the mixture prior (37) is far more flexible in covering highly heterogeneous distributions.

Each local model is then assumed to be chosen from one of these K prototypes. Thus the prior distribution for $\theta_i$ can be modeled as a mixture,

$$p(\theta_i|\phi) = \sum_{j=1}^{K} \frac{1}{K} \mathcal{N}(\theta_i; \mu_j; \sigma^2 I), \tag{38}$$

where $\sigma$ is the hyperparameter that captures perturbation scale, and can be chosen by users or learned. Note that we put equal mixing proportions 1/K due to the symmetry, a priori. That is, each client can take any of $\mu_j$'s equally likely a priori.

We then describe our choice of the variational density $q(\phi) \Pi_i q_i(\theta_i)$ to approximate the posterior $p(\phi, \theta_1, ..., \theta_N|D_1, ..., D_N)$. First, $q_i(\theta_i)$ is chosen as a spiky Gaussian, in other words, it has a probability density which is concentrated on the mean value.

$$q(\theta_i) = \mathcal{N}(\theta_i; m_i, \epsilon^2 I), \tag{39}$$

with tiny $\varepsilon$, which corresponds to the MC-Dropout model with near-0 dropout probability. For $q(\phi)$ we consider a Gaussian factorized over $\mu_j$'s, but with near-0 variances, that is,

$$q(\phi) = \prod_{j=1}^{K} \mathcal{N}(\mu_j; r_j, \epsilon^2 I), \tag{40}$$

where $\{r_j\}_{j=1}^{K}$ are variational parameters ($L_0$) and $\varepsilon$ is near 0 (e.g., $10^{-6}$). The main reason why we make $q(\phi)$ spiky is that the resulting near-deterministic $q(\phi)$ allows for computationally efficient and accurate MC sampling during ELBO optimization as well as test time (global) prediction, avoiding difficult marginalization. Although Bayesian inference in general encourages to keep as many plausible latent states as possible under the given evidence (observed data), we aim to retain this uncertainty by having many (possibly redundant) spiky prototypes $\mu_j$'s rather than imposing larger variances for individual ones (e.g., finite-sample approximation of a smooth distribution). Note that the number of prototypes K itself is a latent (hyper)parameter, and in principle one can achieve the same uncertainty effect by trade-off between $K$ and $\varepsilon$: either small $K$ with large $\varepsilon$ or large $K$ with small (near-0) $\varepsilon$. A gating network $g = (x; \beta)$ is introduced to make client data dominantly explained by the most relevant model $r_j$. The gating network is described in more detail below.

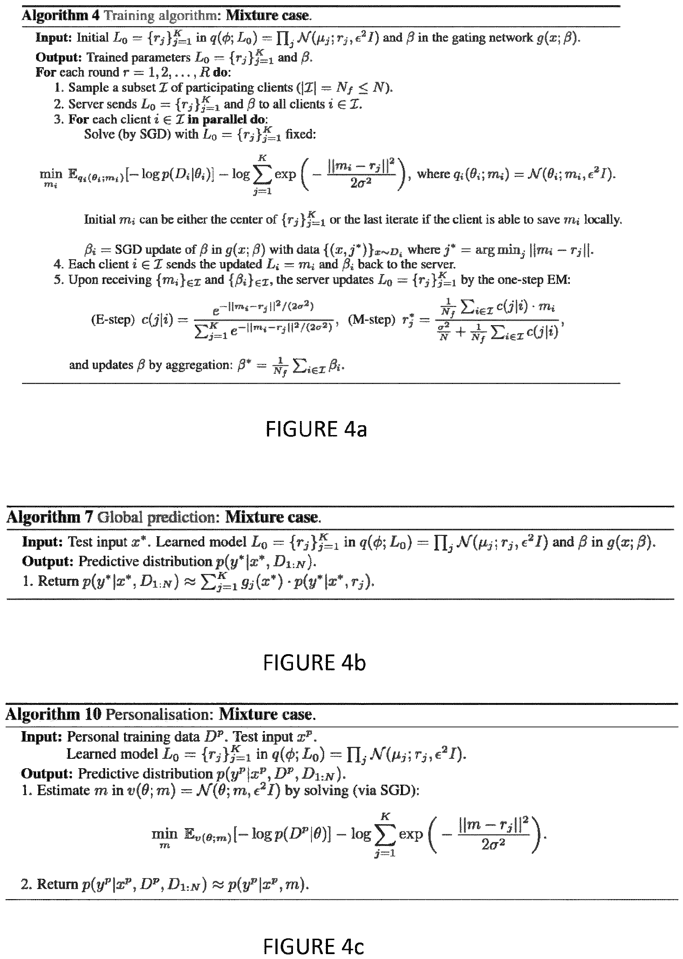

With the full specification of the prior distribution and the variational density family, we are ready to dig into the client objective function (8) and the server (9). Figure 4a is an example of pseudo code which is suitable for implementing a training algorithm using the mixture case. The general steps of the training algorithm are the same as Figure 2b. In other words, in a first step S200 of each round r, the server selects a predetermined number $N_r(\le N)$ of client devices to participate in the round. In a next step S202, the server sends the parameters $L_0$ of the global posterior $q(\phi; L_0)$, to the participating client devices. These parameters are received at each client device at step S204.

**Client** update. In a next step S206, each local client device updates its local posterior $q_i(\theta_i; L_i)$ using an appropriate technique. In this example, due to the spiky $q(\phi)$, we can accurately approximate the third term of (8) as:

$$\mathbb{E}_{q(\phi)q_i(\theta_i)}[\log p(\theta_i|\phi)] \approx \mathbb{E}_{q_i(\theta_i)}[\log p(\theta_i|\phi^*)], \quad where \quad \phi^* = \{\mu_j^* = r_j\}_{j=1}^{K}. \tag{41}$$

Then the last two terms of (8) boil down to $KL(q_i(\theta_i)||p(\theta_i|\phi^*))$, which is the KL divergence between a Gaussian and a mixture of Gaussians. Since $q_i(\theta_i)$ is spiky, the KL divergence can be approximated with high accuracy using the single mode sample $m_i \sim q_i(\theta_i)$, that is,

$$KL(q_i(\theta_i)||p(\theta_i|\phi^*)) \approx \log q_i(m_i) - \log p(m_i|\phi^*) \tag{42}$$

$$= -\log \sum_{j=1}^{K} \mathcal{N}(m_i; r_j, \sigma^2 I) + const. \tag{43}$$

$$= -\log \sum_{j=1}^{K} \exp(-\frac{||m_i - r_j||^2}{2\sigma^2}) + const. \tag{44}$$

Note here that we use the fact that $m_i$ disappears in $\log q_i(m_i)$. Plugging it into (8) yields the following optimization for client i:

$$\min_{m_i} \ \mathbb{E}_{q_i(\theta_i)}[-\log p(D_i|\theta_i)] - \log \sum_{j=1}^{K} \exp(-\frac{||m_i-r_j||^2}{2\sigma^2}). \tag{45}$$

This optimisation in (25) is then solved at step S206 to update $\mathcal{L}_i$ for each client device. Since log-sum-exp is approximately equal to max, the regularization term in (45) focuses only on the closest global prototype $r_j$ from the current local model $m_i$, which is intuitively well aligned with our initial modeling motivation, namely each local data distribution is explained by one of the global prototypes. Lastly, we also note that in the SGD optimization setting where we can only access a minibatch $B \sim D_i$ during the optimization of (45), we follow the conventional practice: replacing the first term of the negative log-likelihood by a stochastic estimate $\mathbb{E}_{q_i(\theta_i)}\mathbb{E}_{(x,y)\sim B}[-\log p(y|x,\theta_i)]$ and multiplying the second term of regularization by $\frac{1}{|D_i|}$. In a next step S208, each local client device sends its updated local parameters $\mathcal{L}_i = m_i$ to the server.

**Server update.** The server receives each of the updated local posterior parameters $L_i$ from the client devices at step S210. At step S212, the global posterior is then updated using the received local posterior parameters. This is done using the optimization below which is derived as follows: First, the KL term in (9) can be easily derived as:

$$KL(q(\phi)||p(\phi)) = \frac{1}{2}\sum_{j=1}^{K} ||r_j||^2 + const. \tag{46}$$

Now, we can approximate the second term of (9) as follows:

$$\mathbb{E}_{q(\phi)q_i(\theta_i)}[\log p(\theta_i|\phi)] \ \approx \ \mathbb{E}_{q(\phi)}[\log p(m_i|\phi)] \tag{47}$$

$$\approx \ \log \sum_{j=1}^{K} \frac{1}{K}\mathcal{N}(m_i; r_j, \sigma^2 I) \tag{48}$$

$$= \ \log \sum_{j=1}^{K} \exp(-\frac{||m_i-r_j||^2}{2\sigma^2}) + const. \tag{49}$$

where the approximations in (47) and (48) are quite accurate due to spiky $q_i(\theta_i)$ and $q(\phi)$, respectively. Combining the two terms leads to the optimization problem for the server:

$$\min_{\{r_j\}_{j=1}^{K}} \ \frac{1}{2}\sum_{j=1}^{K} ||r_j||^2 - \sum_{i=1}^{N} \log \sum_{j=1}^{K} \exp(-\frac{||m_i-r_j||^2}{2\sigma^2}). \tag{50}$$

This optimisation in (50) is then solved at step S212 to update $\mathcal{L}_0$ at the server. The term $\sigma^2$ in the denominator can be explained by incorporating an extra zero local model $m_0 = 0$ (interpreted as a *neutral* model) with the discounted weight $\sigma^2$ rather than 1.

Although (50) can be solved for K > 1 by the standard gradient descent method, we apply the Expectation-Maximization (EM) algorithm instead. Using Jensen's bound with convexity of the negative log function, we have the following alternating steps:

- **E-step:** With the current $\{r_j\}_{j=1}^{K}$ fixed, compute the prototype assignment probabilities for each local model $m_i$:

$$c(j|i) = \frac{e^{-||m_i-r_j||^2/(2\sigma^2)}}{\sum_{j=1}^{K} e^{-||m_i-r_j||^2/(2\sigma^2)}}, \tag{51}$$

where $\lambda$ is a small non-negative number (smoother) to avoid prototypes with no assignment.

- M-step: With the current assignments $c(j|i)$ fixed, solve:

$$\min_{\{r_j\}} \ \frac{1}{2}\sum_j \|r_j\|^2 + \frac{1}{2\sigma^2}\sum_{i,j} c(j|i) \cdot \|m_i - r_j\|^2, \qquad (52)$$

which admits the closed form solution:

$$r_j^* = \frac{\frac{1}{N}\sum_{i=1}^N c(j|i)\cdot m_i}{\frac{\sigma^2}{N}+\frac{1}{N}\sum_{i=1}^N c(j|i)}, \quad j = 1, \dots, K. \qquad (53)$$

The server update equation (53) has intuitive meaning that the new prototype $r_j$ becomes the (weighted) average of the local models $m_i$'s that are close to $r_j$ (those i's with non-negligible $c(j|i)$), which can be seen as an extension of the aggregation step in Fed-Avg to the multiple prototype case. However, (53) requires us to store all latest local models $\{m_i\}_{i=1}^N$, which might be an overhead to the server. It can be more reasonable to utilize those up-to-date local models only that participated in the latest round. So, we use a stochastic approximate, (exponential) smoothed version of the update equation,

$$r_j^* \leftarrow (1-\gamma) \cdot r_j^{old} + \gamma \cdot \frac{\mathbb{E}_{i\sim R}[c(j|i)\cdot m_i]}{\frac{\sigma^2}{N}+\mathbb{E}_{i\sim R}[c(j|i)]}, \quad j = 1, \dots, K, \qquad (54)$$

where $r_j^{old}$ is the prototype from the previous round, and $\gamma$ is the smoothing weight.

Returning to Figure 2b, once the round is completed, the next round can begin with the random selection at step S200 and repeat all other steps. In this example, the trained parameters $L_0 = \{r_j\}_{j=1}^K$ and $\beta$ are output. The input is an initial $L_0 = \{r_j\}_{j=1}^K$ in $q(\phi, L_0)= \prod_{j=1}^K \mathcal{N}(\mu_j; r_j, \epsilon^2 I)$ and $\beta$ in the gaming network $g = (x; \beta)$.

**Global prediction.** Returning to Figure 1c an important task in FL is *global prediction*. Figure 4b is example pseudo code to implement the global prediction in this example. By plugging the mixture prior $p(\theta|\phi)$ of (38) and the factorized spiky Gaussian $q(\phi)$ of (40) into the inner integral of (12), we have predictive distribution averaged equally over $\{r_j\}_{j=1}^K$ approximately, that is, $\int p(\theta|\phi) \ q(\phi) \ d\phi \approx \frac{1}{K}\sum_{j=1}^K p(y^*|x^*, r_j)$. Unfortunately this is not ideal for our original intention where only one specific model $r_j$ out of $K$ candidates is dominantly responsible for the local data. To meet this intention, we extend our model so that the input point x* can affect $\theta$ together with $\phi$, and with this modification our predictive probability can be derived as:

$$p(y^*|x^*, D_1, \dots, D_N) = \iint p(y^*|x^*, \theta) \ p(\theta|x^*, \phi) \ p(\phi|D_1, \dots, D_N) \ d\theta d\phi \qquad (55)$$

$$\approx \iint p(y^*|x^*, \theta) \ p(\theta|x^*, \phi) \ q(\phi) \ d\theta d\phi \qquad (56)$$

$$\approx \int p(y^*|x^*, \theta) \ p(\theta|x^*, \{r_j\}_{j=1}^K) \ d\theta. \qquad (57)$$

To deal with the tricky part of inferring $p(\theta|x^*, \{r_j\}_{j=1}^K)$, we introduce a fairly practical strategy of fitting a *gating function.* The idea is to regard $p(\theta|x^*, \{r_j\}_{j=1}^K)$ as a mixture of experts where the prototypes $r_j$'s serving as experts,

$$p(\theta|x^*, \{r_j\}_{j=1}^K) := \sum_{j=1}^K g_j(x^*) \cdot \delta(\theta - r_j), \qquad (58)$$

where $\delta(\cdot)$ is the Dirac's delta function, and $g(x) \in \Delta^{K-1}$ is a gating function that outputs a $K$-dimensional softmax vector.

Intuitively, the gating function determines which of the K prototypes $\{r_j\}_{j=1}^{K}$ the model $\theta$ for the test point x* belongs to. With (58), the predictive probability in (57) is then written down as:

$$p(y^*|x^*, D_1, ..., D_N) \approx \sum_{j=1}^{K} g_j(x^*) \cdot p(y^*|x^*, r_j). \qquad (59)$$

However, since we do not have this oracle g(x), we introduce and fit a neural network to the local training data during the training stage. Let $g(x; \beta)$ be the gating network with the parameters $\beta$. To train it, we follow the Fed-Avg strategy. In the client update stage at each round, while we update the local model $m_i$ with a minibatch $B \sim D_i$, we also find the prototype closest to $m_i$, namely $j^* :=$ argmin$_j$ $||m_i - r_j||$. Then we form another minibatch of samples $\{(x,j^*)\}_{x \sim B}$ (input $x$ and class label j*), and update $g(x; \beta)$ by SGD. The updated (local) $\beta$'s from the clients are then aggregated (by simple averaging) by the server, and distributed back to the clients as an initial iterate for the next round.

**Personalisation.** Returning to Figure 1d an important task in FL is *personalisation.* Figure 4c is example pseudo code for implementing personalisation. With $v(\theta)$ of the same form as $q_i(\theta_i)$, the VI learning becomes similar to (45). Starting from $p(\theta|D^p, \phi^*)$ in the general framework (14-16), we define the variational distribution $v(\theta) \approx p(\theta|D^p, \phi^*)$ as:

$$v(\theta) = \mathcal{N}(\theta; m, \epsilon^2 I), \qquad (60)$$

where $\varepsilon$ is tiny positive, and m is the only parameters that we learn. Our personalisation training amounts to ELBO optimisation for $v(\theta)$ as in (17), which reduces to:

$$\min_{m} \mathbb{E}_{v(\theta)}[-\log p(D^p|\theta)] - \log \sum_{j=1}^{K} \exp(-\frac{||m-r_j||^2}{2\sigma^2}). \qquad (61)$$

Once we have optimal m (i.e., $v(\theta)$), our predictive model becomes:

$$p(y^p|x^p, D^p, D_1, ..., D_N) \approx p(y^p|x^p, m), \qquad (62)$$

which is done by feed-forwarding test input $x^p$ through the network deployed with the parameters m.

**Theoretical Analysis**

We provide two theoretical results for our Bayesian FL algorithm: Convergence analysis and Generalisation error bound. As a special block-coordinate optimisation algorithm, we show that it converges to an (local) optimum of the training objective (6); We theoretically show how well this optimal model trained on empirical data performs on unseen test data points. The computational complexity (including wall-clock running times) and communication cost of the proposed algorithms are analysed and summarised. Our methods incur only constant-factor extra cost compared to the minimal-cost FedAvg ("Communication-Efficient Learning of Deep Networks from Decentralized Data" by McMahan et al published in AI and Statistics (AISTATS) in 2017, reference [44]).

**Convergence Analysis.** Our (general) FL algorithm is a special block-coordinate SGD optimisation of the ELBO function in (6) with respect to the (N + 1) parameter groups: $L_0$ (of $q((\phi; L_0))$, $L_1$ (of $q_1(\theta_1; L_1)$), ..., and $L_N$ (of $q_N(\theta_N; L_N)$). In this section we will provide a theorem that guarantees convergence of the algorithm to a local minimum of the ELBO objective function under some mild assumptions. We will also analyse the convergence rate. Note that although our FL algorithm is a special case of the general block-coordinate SGD optimisation, we may not directly apply the existing convergence results for the regular block-coordinate SGD methods since they mostly rely on non-overlapping blocks with cyclic or uniform random block selection strategies. As the block selection strategy in our FL algorithm is unique with overlapping blocks and non-uniform random block selection, we provide our own analysis here. Promisingly, we show that in accordance with general regular block-coordinate SGD (cyclic/uniform non-overlapping block selection), our FL algorithm has $O(1/\sqrt{t})$ convergence rate, which is also asymptotically the same as that of the (holistic, non-block-coordinate) SGD optimisation. Note that this section is about the convergence of our algorithm to an (local) optimum of the training objective (ELBO). The question of how well this optimal model trained on empirical data performs on the unseen data points will be discussed in.

**Theorem (Convergence analysis)** We denote the objective function in (6) by f(x) where x = [x$_0$, x$_1$, ..., x$_N$] corresponding to the variational parameters x$_0$: = L$_0$, x$_1$: = L$_1$, , x$_N$: = L$_N$. Let $\eta_t = L + \sqrt{t}$ for some constant $\bar{L}$, and $\bar{x}^T = \frac{1}{T}\sum_{t=1}^{T} x^t$, where t is the batch iteration counter, x$^t$ is the iterate at t by following our FL algorithm, and N$_f$ (<_ N) is the number of participating clients at each round. The following holds for any T:

$$\mathbb{E}[f(\bar{x}^T)] - f(x^*) \leq \frac{N+N_f}{N_f} \cdot \frac{\frac{\sqrt{T}+\bar{L}}{2}D^2 + R_f^2\sqrt{T}}{T} = O(\frac{1}{\sqrt{T}}), \qquad (63)$$

where x* is the (local) optimum, *D* and *R$_f$* are some constants, and the expectation is taken over randomness in minibatches and selection of participating clients.

The theorem states that $\bar{x}^t$ converges to the optimal point x* in expectation at the rate of $O(1/\sqrt{t})$. This convergence rate asymptotically equals that of the conventional (non-block-coordinate, holistic) SGD algorithm.

**Generalisation Error Bound.** In this section we will discuss generalisation performance of our proposed algorithm, answering the question of how well the Bayesian FL model trained on empirical data performs on the unseen data points. We aim to provide the upper bound of the generalisation error averaged over the posterior distribution of the model parameters ($\phi$, $\{\theta_i\}_{i=1}^N$), by linking it to the expected empirical error with some additional complexity terms.

To this end, we first consider the PAC-Bayes bounds naturally because they have similar forms relating the two error terms (generalisation and empirical) expected over the posterior distribution via the KL divergence term between the posterior and the prior distributions. However, the original PAC-Bayes bounds have the square root of the KL in the bound, which deviates from the ELBO objective function that has the sum of the expected data loss and the KL term as it is (instead of the square root). However, there are some recent variants of PAC-Bayes bounds, specifically the *PAC-Bayes-λ bound,* which removes the square root of the KL and suits better with the ELBO objective function.

To discuss it further, the objective function of our FL algorithm (6) can be viewed as a conventional variational inference ELBO objective with the prior p(B) and the posterior q(B), where B = {$\phi$, $\theta_1$, ..., $\theta_N$} indicates the set of all latent variables in our model. More specifically, the negative ELBO (function of the variational posterior distribution q) can be written as:

$$-ELBO(q) = \mathbb{E}_{q(B)}[\hat{l}_n(B)] + \frac{1}{n}KL(q(B)||p(B)), \qquad (64)$$

where $\hat{l}_n(B)$ is the empirical error/loss of the model *B* on the training data of size *n.* We then apply the PAC-Bayes-A bound; for any $\lambda \in (0,2)$, the following holds with probability at least 1 - $\delta$:

$$\mathbb{E}_{q(B)}[l(B)] \leq \frac{1}{1-\lambda/2}\mathbb{E}_{q(B)}[\hat{l}_n(B)] + \frac{1}{\lambda(1-\lambda/2)}\frac{KL(q(B)||p(B))+\log(2\sqrt{n}/\delta)}{n}, \qquad (65)$$

where *I(B)* is the generalisation error/loss of the model *B.* Thus, when $\lambda$ = 1, the right hand side of (65) reduces to -2 · *ELBO(q)* plus some complexity term, justifying why maximizing ELBO with respect to q can be helpful for reducing the generalisation error. Although this argument may look partially sufficient, but strictly saying, the extra factor 2 in the ELBO (for the choice $\lambda$ = 1) may be problematic, potentially making the bound trivial and less useful. Other choice of $\lambda$ fails to recover the original ELBO with slightly deviated coefficients for the expected loss and the KL.

In what follows, we state our new generalisation error bound for our FL algorithm, which does not rely on the PAC-Bayes but the recent regression analysis technique for variational Bayes, which was also adopted in the analysis of some personalised FL algorithm recently.

**Theorem (Generalisation error bound)** Assume that the variational density family for q$_i$($\theta_i$) is rich enough to subsume Gaussian. Let d$^2$(P$_{\theta_i}$, P$^i$) be the expected squared Hellinger distance between the true class distribution P$^i$(y|x) and model's P$_{\theta_i}$(y|x) for client i's data. The optimal solution ($\{q_i^*(\theta_i)\}_{i=1}^N$, q*($\phi$)) of our FL-ELBO optimisation problem (6) satisfies:

$$\frac{1}{N}\sum_{i=1}^{N} \mathbb{E}_{q_i^*(\theta_i)}[d^2(P_{\theta_i}, P^i)] \;\leq\; O(\tfrac{1}{n}) + C \cdot \epsilon_n^2 + C'(r_n + \tfrac{1}{N}\sum_{i=1}^{N} \lambda_i^*), \qquad (66)$$

with high probability, where $C, C' > 0$ are constant, $\lambda_i^* = \min_{\theta\in\Theta}||f_\theta - f^i||_\infty^2$ is the best error within our backbone network family $\Theta$, and $r_n, \varepsilon_n \to 0$ as the training data size $n \to \infty$.

This theorem implies that the optimal solution for our FL-ELBO optimisation problem (attainable by our block-coordinate FL algorithm) is asymptotically optimal, since the right hand side of (66) converges to 0 as the training data size n → ∞. Note that the last term $\frac{1}{N}\sum_i \lambda_i^*$ can be made arbitrarily close to 0 by increasing the backbone capacity (MLPs as universal function approximators). But practically for fixed n, as enlarging the backbone capacity also increases $\varepsilon_n$ and $r_n$, it is important to choose the backbone network architecture properly. Note also that our assumption on the variational density family for $q_i(\theta_i)$ is easily met; for instance, the families of the mixtures of Gaussians adopted in NIW and mixture models obviously subsume a single Gaussian family.

**Evaluation.**

We evaluate the proposed hierarchical Bayesian models on several FL benchmarks: **CIFAR-100, MNIST, Fashion-MNIST,** and **EMNIST.** We also have results on the challenging corrupted CIFAR (CIFAR-C-100) that renders the client data more heterogeneous both in input images and class distributions. Our implementation is based on "Fed-BABU: Towards Enhanced Representation for Federated Image Classification" by Babu et al published in International Conference on Learning Representations, 2022, reference [45]) where MobileNet (described in "MobileNets: Efficient convolutional neural networks for mobile vision applications" publihsed by Howaard et al in arXiv preprint arXiv: 1704.04861, 2017.) is used as a backbone. The implementations follow the body-update strategy: the classification head (the last layer) is randomly initialised and fixed during training, with only the network body updated (and both body and head updated during personalisation). We report results all based on this body-update strategy since we observe that it considerably outperforms the full update for our models and other competing methods. The hyperparameters are: (NIW) $\varepsilon = 10^{-4}$ and $p = 1 - 0.001$ (See ablation study below for other values); (Mixture) $\sigma^2 = 0.1$, $\varepsilon = 10^{-4}$, mixture order K = 2, and the gating network has the same architecture as the main backbone, but the output cardinality changed to K. Other hyperparameters including batch size (50), learning rate (0.1 initially, decayed by 0.1) and the number of epochs in personalisation (5), are the same as those in the FedBABU paper.

Personalisation (CIFAR-100): Specifically, we are given a training split of the personalized data to update the FL-trained model. Then we measure the performance of the adapted model on the test split that conforms to the same distribution as the training split. Following the FedBABU paper, the client data distributions are heterogeneous non-iid, formed by the sharding-based class sampling (described in "Efficient Learning of Deep Networks from Decentralized Data" by McMahan el al published in 2017 in AI and Statistics (AISTATS).). More specifically, we partition data instances in each class into non-overlapping equal-sized shards, and assign s randomly sampled shards (over all classes) to each of N clients. Thus the number of shards per user s can control the degree of data heterogeneity: small s leads to more heterogeneity, and vice versa. The number of clients N = 100 (each having 500 training, 100 test samples), and we denote by $f$ the fraction of participating clients. So, $N_f = N \cdot f$ clients are randomly sampled at each round to participate in training. Smaller $f$ makes the FL more challenging, and we test two settings: $f = 1.0$ and 0.1. Lastly, the number of epochs for client local update at each round is denoted by $\tau$ where we test $\tau = 1$ and 10, and the number of total rounds is determined by $\tau$ as $320/\tau$ for fairness. Note that smaller $\tau$ incurs more communication cost but often leads to higher accuracy. For the competing methods FedBE ("FedBE: Making Bayesian Model Ensemble Applicable to Federated Learning" by Chen et al published in International Conference on Learning Representations, 2021, reference [16]) and FedEM ("Federated Multi-Task Learning under a Mixture of Distributions" by Marfoq et al published in Advances in Neural Information Processing Systems, 2021, reference [41]), we set the number of ensemble components or base models to 3. For FedPA (described in "Federated Learning via Posterior Averaging: A New Perspective and Practical Algorithms" by Shedivat published in International Conference on Learning Representations, 2021, reference [4]): shrinkage parameter $\rho = 0.01$.

**MNIST/F-MNIST/EMNIST.** Following the standard protocols, we set the number of clients $N = 100$, the number of shards per client $s = 5$, the fraction of participating clients per round $f = 0.1$, and the number of local training epochs per round $\tau = 1$ (total number of rounds 100) or 5 (total number of rounds 20) for MNIST and F-MNIST. For EMNIST, we have $N = 200$, $f = 0.2$, $\tau = 1$ (total number of rounds 300). We follow the standard Dirichlet-based client data splitting.

For the competing methods FedBE and FedEM, we use three-component models. The backbone is an MLP with a single hidden layer with 256 units for MNIST/F-MNIST, while we use a standard ConvNet with two hidden layers for EMNIST.

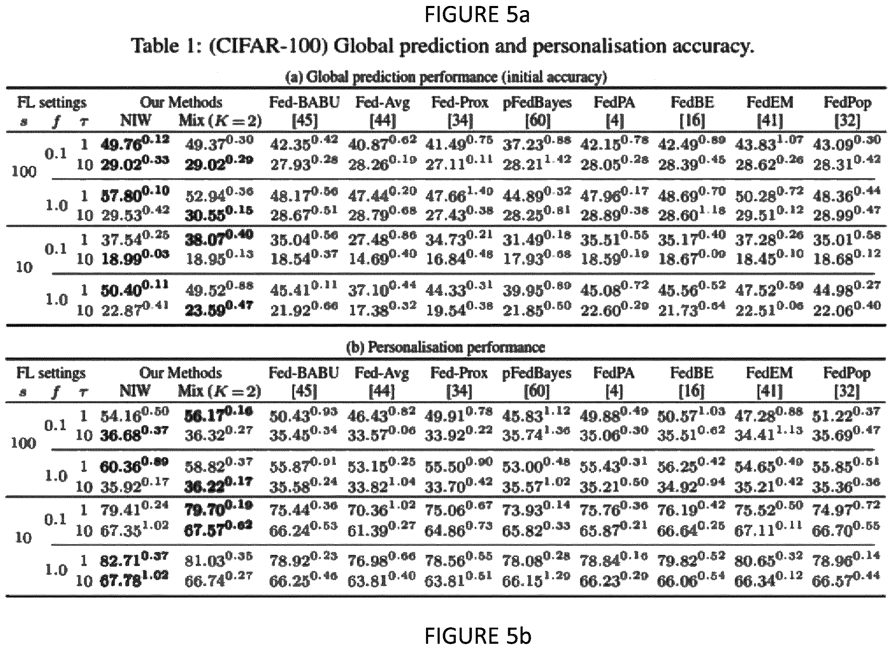

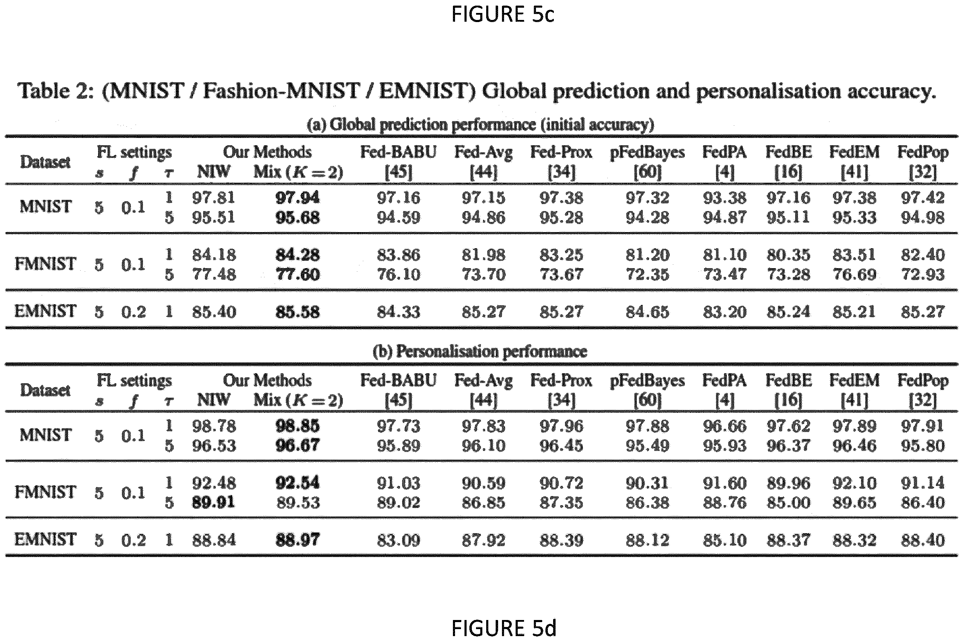

**Main results and interpretation.** In Figures 5a to 5e, we compare our methods (NIW and Mixture with $K = 2$) against the popular FL methods, including FedAvg, FedBABU, FedProx (described in Tian Li, Anit Kumar Sahu, Manzil Zaheer, Maziar Sanjabi, Ameet Talwalkar, and Virginia Smith. "Federated Optimization in Heterogeneous Networks" by Li et al published in arXiv preprint arXiv:1812.06127, 2018, reference [34]), as well as recent Bayesian/ensemble methods, FedPA, FedBE, pFedBayes. FedEM, and FedPop (described in FedPop: A Bayesian Approach for Personalised Federated Learning" by Kotelevskii et al published in Advances in Neural Information Processing Systems, 2022, reference [32]. We run the competing methods (implementation based on their public codes or our own implementation if unavailable) with default hyperparameters (e.g., $\mu$ = 0.01 for FedProx) and report the results. First of all, our two models (NIW and Mix.) consistently perform the best (by large margins most of the time) in terms of both global prediction and personalisation for nearly all FL settings on the two datasets. This is attributed to the principled Bayesian modelling of the underlying FL data generative process in our approaches that can be seen as rigorous generalisation and extension of the existing intuitive algorithms such as FedAvg and FedProx. In particular, the superiority of our methods to the other Bayesian/ensemble approaches verifies the effectiveness of modelling client-wise latent variables $\theta_i$ against the commonly used shared $\theta$ modeling.

**CIFAR-100 Corrupted (CIFAR-C-100).** About the dataset: CIFAR's test split (10K images) are corrupted by 19 different types of noise processes (e.g., Gaussian, motion blur, JPEG). For each corruption type, there are 5 different corruption levels, and we use the severest one. The CIFAR-100-Corrupted dataset (published in "Benchmarking neural network robustness to common corruptions and perturbations" by Hendrycks et al published in International Conference on Learning Representations, 2019.) makes CIFAR-100's test split (10K images) corrupted by 19 different noise processes (e.g., Gaussian, motion blur, JPEG). For each corruption type, there are 5 corruption levels, and we use the severest one. Randomly chosen 10 corruption types are used for training (fixed) and the rest 9 types for personalisation. We divide N = 100 clients into 10 groups, each group assigned one of the 10 training corruption types exclusively (denoted by $D^c$ the corrupted data for the group c = 1, ... ,10). Each $D^c$ is partitioned into 90%/10% training/test splits, and clients in each group ($N$/10 clients) gets non-iid train/test subsets from $D^c$'s train/test splits by following the sharding strategy with s = 100 or 50. This way, the clients in different groups have considerable distribution shift in input images, while there also exists heterogeneity in class distributions even within the same groups.

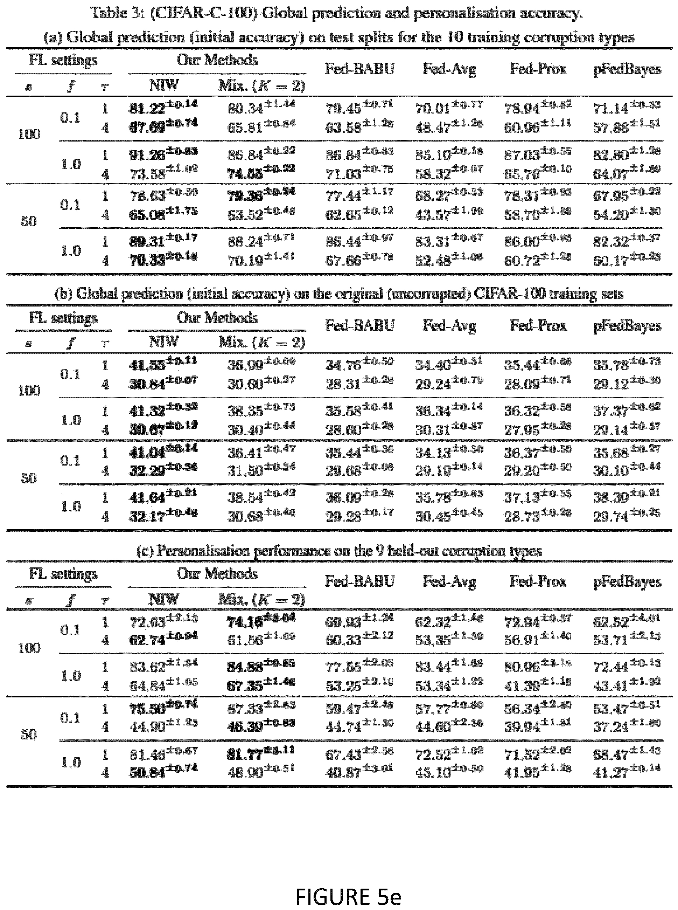

For the FL-trained models, we evaluate global prediction on two datasets: clients' test splits from the 10 training corruption types and the original (uncorrupted) CIFAR's training split (50K images). For personalisation, we partition the clients into 9 groups, and assign one of the 9 corruption types to each group exclusively. Within each group we form non-iid sharding-based subsets similarly, and again we split the data into the 90% training/finetuning split and 10% test. Note that this personalisation setting is more challenging compared to CIFAR-100 since the data for personalisation are utterly unseen during the FL training stage. We test $\tau$ = 1 and 4 scenarios. We test sharding parameters = 100 or 50, participating client fraction $f$ = 1.0 or 0.1, and the number of local epochs $\tau$ = 1 and 4 scenarios where the results are reported in Table 3 of Figure 5e. As shown, our two models (NIW and Mix.) consistently perform the best (by large margins most of the time) in terms of both global prediction and personalisation for all FL settings. This is attributed to the principled Bayesian modeling of the underlying FL data generative process in our approaches. In particular, the superiority of our methods to the other Bayesian approach pFedBayes verifies the effectiveness of modeling client-wise latent variables $\theta_i$ against the commonly used shared $\theta$ modeling, especially for the scenarios of significant client data heterogeneity (e.g., personalisation on data with unseen corruption types). Our methods are especially robust for the scenarios of significant client data heterogeneity, e.g., CIFAR-C-100 personalisation on data with unseen corruption types as shown in the tables of Figure 5e.

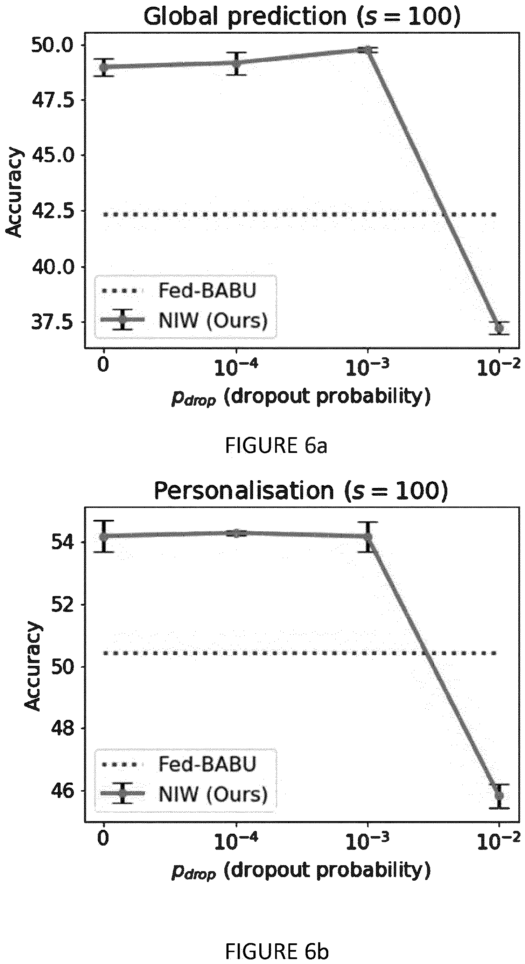

**(Ablation)** Hyperparameter sensitivity. We test sensitivity to some key hyperparameters in our models. For NIW, we have $p = 1 - p_{drop}$, the MC-dropout probability, where we used $p_{drop}$ = 0.001 in the main experiments. In Figures 6a and 6b we report the performance of NIW for different values ($p_{drop} = 0, 10^{-4}, 10^{-2}$) on CIFAR-100 with (s = 100, $f$ = 0.1, $\tau$ = 1) setting. We see that the performance is not very sensitive to $p_{drop}$ unless it is too large (e.g., 0.01).

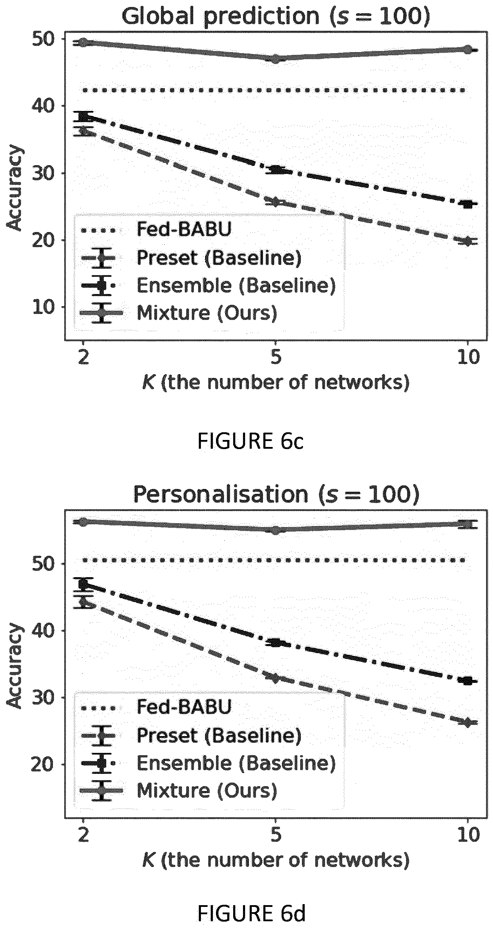

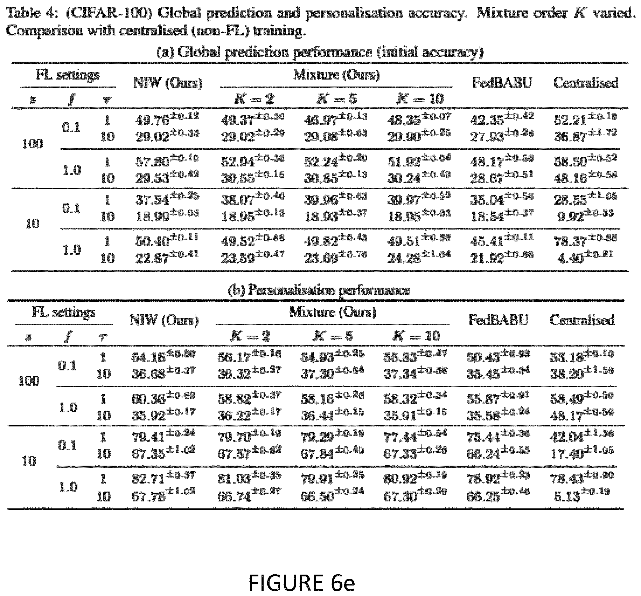

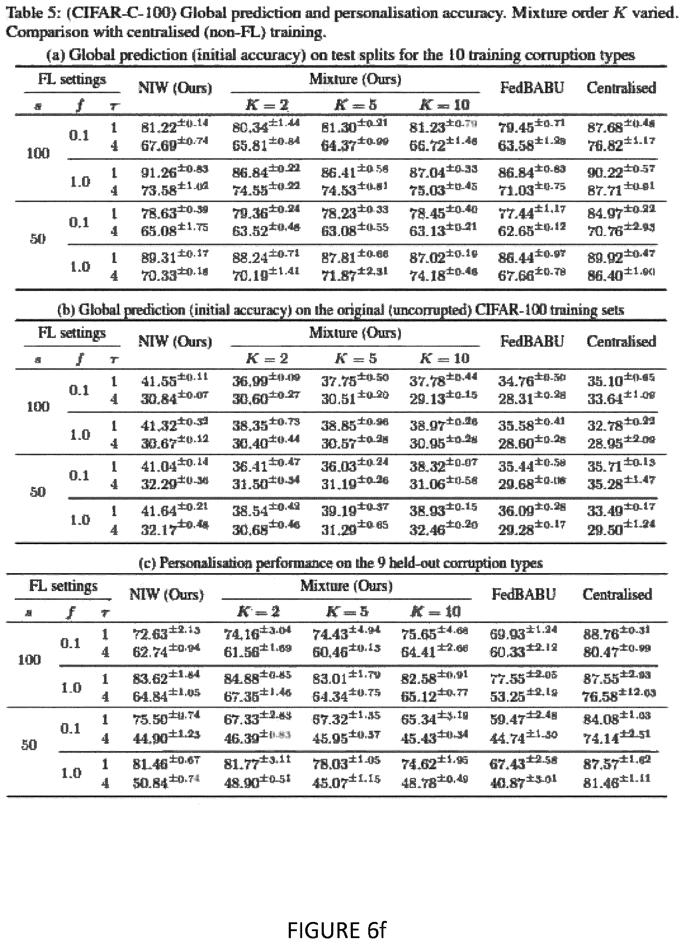

For the Mixture model, different mixture orders K = 2,5,10 are contrasted in Figures 6c and 6d. More information is also provided in the tables shown in Figures 6e and 6f. As explained above, our Mixture model maintains K backbone networks, where the mixture order is usually small but greater than 1 (e.g. K = 2). Thus it requires additional computational resources than other methods (including our NIW model) that only deal with a single backbone. Figures 6c and 6d thus compares the Mixture model with a preset baseline extension and an ensemble baseline extension to Fed-BABU which are generated as follows.

In a first step, the server maintains $K$ networks (denoted by ($\theta^1, ... \theta^K$). In a second step, we partition the client devices into K groups with equal proportions. We assign $\theta^j$ to each group $j$ (j = 1, ..., $K$). At each round, each participating client device i receives the current model $\theta^{j(i)}$ from the server, where $j(i)$ means the group index to which client device $i$ belongs. The client devices perform local updates as usual by warm-start with the received models, and send the updated models back to the server. The server then collects the updated local models from the client devices, and takes the average within each group j to update $\theta^j$.

After training, we have trained $K$ networks. At test (inference) time, we can use these $K$ networks in two different ways. In a first option termed a Preset Baseline, each client device i uses the network assigned to its group, e.g. $\theta^{j(i)}$, for both prediction and finetuning/personalisation. In a second option termed an Ensemble Baseline, we use all $K$ networks for prediction and finetuning.

As seen, having more mixture components does no harm (no overfitting), but we do not see further improvement over K = 2 in our experiments. In the last columns of the tables, we also report the performance of the centralised (non-FL) training in which batch sampling follows the corresponding FL settings. That is, at each round, the minibatches for SGD (for conventional cross-entropy loss minimisation) are sampled from the data of the participating clients. The centralised training sometimes outperforms the best FL algorithms (our models), but can fail completely especially when data heterogeneity is high (small s) and $\tau$ is large. This may be due to overtraining on biased client data for relatively few rounds. Our FL models perform well consistently and stably being comparable to centralised training on its ideal settings (small $\tau$ and large s).

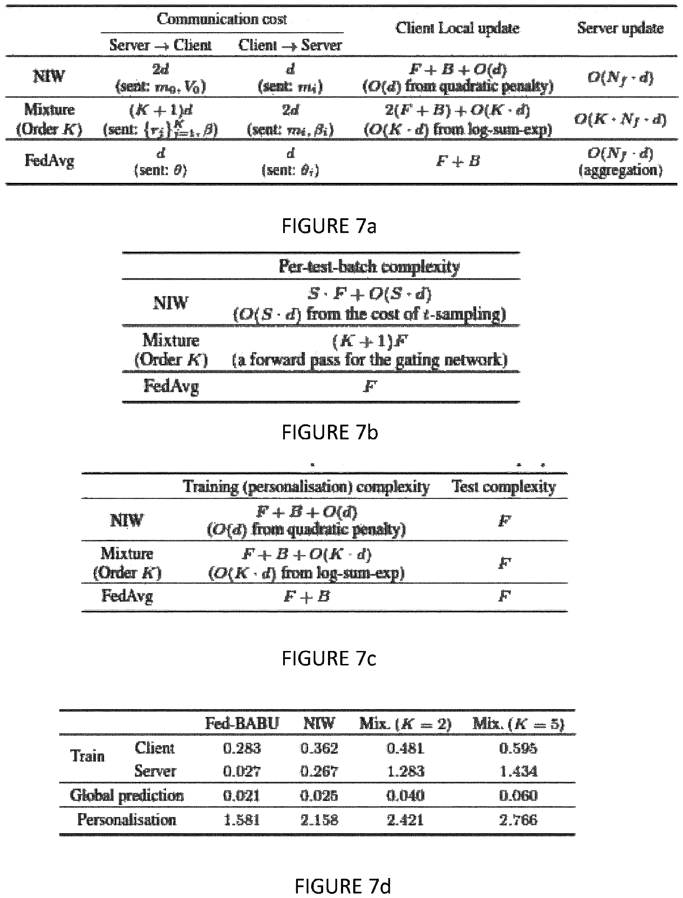

Figures 7a to 7d are tables comparing the complexity of the proposed algorithms with FedAvg. In Figure 7a, the training complexity is compared. All quantities are per-round, per-batch and per-client costs. In the entries, d=the number of parameters in the backbone network, F=time for feed-forward pass, B=time for backpropagation and $N_f$ is the number of participating clients per round. In Figure 7b, the global prediction complexity is compared. All quantities are per-test-batch costs. In the entries, d=the number of parameters in the backbone network, F=time for feed-forward pass, and S= the number of samples $\theta^s$ from the student-t distribution in the NIW case (we use S=1). In Figure 7c, the personalisation complexity is compared. All quantities are per-train/per-batch costs. In the entries, d=the number of parameters in the backbone network, F=time for feed-forward pass and B=time for backpropagation. In Figure 7d, we compare the running times in seconds on CIFAR-100 with s=100, f=1.0 and $\tau$=1. These measurements are done on the same machine a Xeon 2.20GHz CPU with a single RTX 2080 Ti GPU.

As shown in Figures 7a to 7d, although the models proposed in the present techniques achieve significant improvement in prediction accuracy, there is extra computational overhead compared to simpler federated learning methods such as Fed-BABU. For the NIW method, the extra cost in the local client update and personalisation (training) originates from the penalty term in equation (25), while model weight squaring to compute $V_0$ in equation (32) incurs additional cost in the server update. For the Mixture method, the increased time in training is mainly due to the overhead of computing distances from the K server models in equation (45) and (50). However, overall the extra costs are not prohibitively large, rendering our methods sufficiently practical.

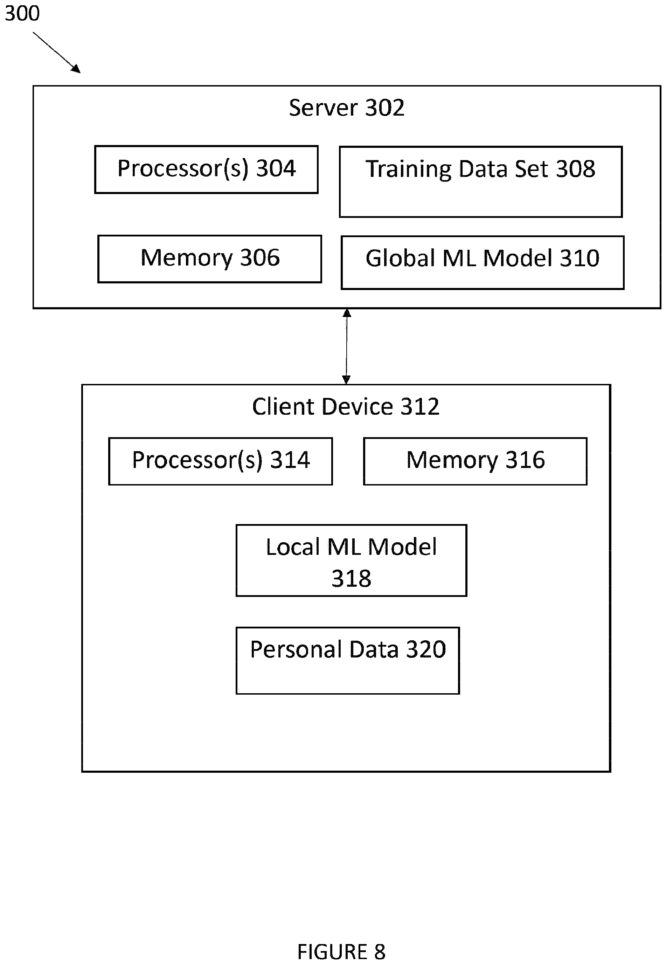

Figure 8 is a block diagram of a system 300 for using federated learning to train/update a ML model 310. The system comprises a server 302 and a plurality of client devices 312. Only one client device 312 is shown here for the sake of simplicity, but it will be understood that there may be tens, hundreds, thousands, or more, client devices.

The system 300 comprises a server 302 for training a global machine learning, ML, model using federated learning. The server 302 comprises: at least one processor 304 coupled to memory 306. The at least one processor 304 may be arranged to: receive at least one network weight to the server from each client device; link the at least one network weight to a higher-level variable; and train the ML model 310 using the set of training data 308 to optimise a function dependent on the weights from the client devices and a function dependent on the higher-level variable.

To train/update the global model 310 using the data received from the client devices, the server may: analyse a loss function associated with the ML model to determine whether a posterior needs to be updated; and train the ML model by updating the posterior to put mass on the higher-level variables that have high compatibility scores with the network weights from the client devices, and to be close to a prior. Information about the posterior and prior is provided above.

The system 300 comprises a client device 312 for locally training a local version 318 of the global ML model using local/personal training data 320.

The client device comprises at least one processor 314 coupled to memory 316 arranged to: receive the updated posterior from the server; and train, using the updated posterior and the set of personal training data, the local version of the ML model to minimise a class prediction error in its own data and to be close to the current global standard.

The client device 312 may be any one of: a smartphone, tablet, laptop, computer or computing device, virtual assistant device, a robot or robotic device, a robotic assistant, image capture system or device, an Internet of Things device, and a smart consumer device. It will be understood that this is a non-limiting and non-exhaustive list of apparatuses.

The at least one processor 314 may comprise one or more of: a microprocessor, a microcontroller, and an integrated circuit. The memory 316 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example.

**Comparison with known Bayesian or ensemble FL approaches.**

Some recent studies tried to tackle the FL problem using Bayesian or ensemble-based methods. As we mentioned earlier, the key difference is that most methods do not introduce Bayesian hierarchy in a principled manner. Instead, they ultimately treat network weights $\theta$ as a random variable shared across all clients. On the other hand, our approach assigns individual $\theta_i$ to each client $i$ governed by a common prior $p(\theta_i|\phi)$. The non-hierarchical approaches mostly resort to ad hoc heuristics and/or strong assumptions in their algorithms. For instance, FedPA (described in "Federated Learning via Posterior Averaging: A New Perspective and Practical Algorithms" by Al-Shedivat et al published in International Conference on Learning Representations, 2021) aims to establish the product-of-experts decomposition,

$$p(\theta|D_{1:N}) \propto \prod_{i=1}^{N} p(\theta|D_i)$$ to allow client-wise inference of $p(\theta|D_i)$. However, this decomposition does not hold in general unless a strong assumption of uninformative prior $p(\theta) \propto 1$ is made.

Other approaches include FedBE (Fed Bayesian Ensemble) which is described in "FedBE: Making Bayesian Model Ensemble Applicable to Federated Learning" by Chen et al published in International Conference on Learning Representations, 2021 aims to build the global posterior distribution $p(\theta|D_{1:N})$ from the individual posteriors $p(\theta|D_i)$ in some ad hoc ways. FedEM described in ("Federated Multi-Task Learning under a Mixture of Distributions" by Marfoq, et al published in Advances in Neural Information Processing Systems, 2021) forms a seemingly reasonable hypothesis that local client data distributions can be identified as mixtures of a fixed number of base distributions (with different mixing proportions). Although they have sophisticated probabilistic modeling, this method is not a Bayesian approach. FedBayes described in "Personalized Federated Learning via Variational Bayesian Inference" by Chang et al published in the 2022 International Conference on Machine Learning can be seen as an implicit regularisation-based method to approximate $p(\theta|D_{1:N})$ from individual posteriors $p(\theta|D_i)$. To this end, they introduce the so-called global distribution $w(\theta)$, which essentially serves as a regulariser to prevent local posteriors from deviating from it. The introduction of $w(\theta)$ and its update strategy appears to be a hybrid treatment rather than solely Bayesian perspective. Finally, FedPop described in "FedPop: A Bayesian Approach for Personalised Federated Learning" by Kotelevskii et al published in Advances in Neural Information Processing Systems, 2022 has a similar hierarchical Bayesian model structure to the method described above, but their model is limited to a linear deterministic model for the shared variate.

**Other Bayesian FL algorithms.** Other recent Bayesian methods adopt the expectation-propagation (EP) approximations for example as described in "Federated Learning as Variational Influence: A Scalable Expectation Propagation Approach" by Guo et al published in International Conference on Learning Representation 2023 or "Partitioned Variational Inference: A framework for probabilistic federated learning" by Guo et al published in 2022. In particular, the EP update steps are performed locally with the client data. However, neither of these two works is a hierarchical Bayesian model - unlike our individual client modelling, they have a single model $\theta$ shared across clients, without individual modeling for client data, thus following FedPA-like inference $p(\theta|D_{1:N})$. The consequence is that they lack a systematic way to distinctly model global and local parameters for global prediction and personalised prediction respectively.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

## Claims

1. A computer-implemented method for training, using federated learning, a global machine learning, ML, model for use by a plurality of client devices, the method comprising:

   defining, at a server, a Bayesian hierarchical model which links a global random variable with a plurality of local random variables, one for each of the plurality of client devices, wherein the Bayesian hierarchical model comprises a posterior distribution which is suitable for predicting the likelihood of the global random variable and the local random variables given each individual dataset at the plurality of client devices;

   approximating, at the server, the posterior distribution using a global ML model and a plurality of local ML models, wherein the global ML model is parameterised by a global parameter which is updated at the server, each of the plurality of local ML models is associated with one of the plurality of client devices and each local ML model is parameterised by a local parameter which is updated at the client device which is associated with the local ML model;

   sending, from the server, the global parameter to a predetermined number of the plurality of client devices;

   receiving, at the server from each of the number of the plurality of client devices, an updated local parameter, wherein each updated local parameter has been determined by training, on the client device, the local ML model using a local dataset, and wherein during training of the local ML model, the global parameter is fixed; and

training, at the server, the global ML model using each of the received updated local parameters to determine an updated global parameter, wherein during training of the global model, each local parameter is fixed.

2. The method of claim 1, wherein at least some of the local ML models and/or global ML model have different structures.

3. The method of claim 1 or claim 2, wherein training the global ML model comprises optimising using a regularization term which penalises deviation between the updated global parameter and the global parameter which was sent to the client devices.

4. The method of any one of the preceding claims, wherein training the global ML model comprises optimising using a regularization term which penalises deviation between the updated global parameter and each of the local parameters received from the plurality of client devices.

5. The method of any one of the preceding claims, wherein approximating the posterior distribution comprises using a Normal-Inverse-Wishart model as the global ML model and using a global mean parameter and a global covariance parameter as the global parameter and using a mixture of two Gaussian functions as the local ML model and a local mean parameter as the local parameter.

6. The method of any one of claims 1 to 4, wherein approximating the posterior distribution comprises using a mixture model which comprises multiple different prototypes and each prototype is associated with a separate global random variable.

7. The method of claim 6, further comprising using a product of multiple multivariate normal distributions as the global model and using variational parameters as the global parameter and using one of the multiple multivariate normal distributions as the local ML model and a local mean parameter as the local parameter.

8. The method of any one of the preceding claims, wherein training, on the client device, comprises optimising using a loss function to fit each local parameter to the local dataset.

9. The method of any one of the preceding claims, wherein training, on the client device, comprises optimising using a regularisation term which penalises deviation between each updated local parameter and a previous local parameter.

10. A computer-implemented method for generating, using a client device, a personalised model using the global ML model which has been trained using any one of the preceding claims, the method comprising:

   receiving, at the client device from the server, the global parameter for the trained global ML model;
   optimising, at the client device, a local parameter using the received global parameter, by applying a regularisation term which penalises deviation between the optimised local parameter and the received global parameter, and
   outputting the optimised local parameter as the personalised model.

11. A computer-implemented method for generating, using a client device, a personalised model using the global ML model which has been trained using any one of the preceding claims, the method comprising

   receiving, at the client device from the server, the global parameter for the trained global ML model;
   obtaining a set of personal data;
   optimising, at the client device, a local parameter using the received global parameter, by applying a regularisation term which penalises deviation between the optimised local parameter and the received global parameter and by applying a loss function over the set of personal data, and
   outputting the optimised local parameter as the personalised model.

12. A computer-implemented method for using, at a client device, a personalised model to process data, the method comprising

   generating a personalised model as claimed in claim 10 or claim 11;
   receiving an input; and
   predicting, using the personalised model, an output based on the received input.

**13.** A computer-readable storage medium comprising instructions which, when executed by a processor, causes the processor to carry out the method of any of the preceding claims.

**14.** A system for training, using federated learning, a global machine learning, ML, model, the system comprising:

a server comprising a processor coupled to memory, and
a plurality of client devices each comprising a processor coupled to memory,
wherein the processor at the server is configured to:

define a Bayesian hierarchical model which links a global random variable with a plurality of local random variables, one for each of the plurality of client devices, wherein the Bayesian hierarchical model comprises a posterior distribution which is suitable for predicting the likelihood of the global random variable and the local random variables given each individual dataset at the plurality of client devices;
approximate the posterior distribution using a global ML model and a plurality of local ML models, wherein the global ML model is parameterised by a global parameter which is updated at the server, each of the plurality of local ML models is associated with one of the plurality of client devices and each local ML model is parameterised by a local parameter which is updated at the client device which is associated with the local ML model;
send the global parameter to a predetermined number of the plurality of client devices;
receive, from each of the predetermined number of the plurality of client devices, an updated local parameter;
train the global ML model using each of the received updated local parameters to determine an updated global parameter, wherein during training of the global model, each local parameter is fixed; and

wherein the processor at each of the client devices is configured to:

receive the global parameter;
train the local ML model using a local dataset on the client device to determine an updated local parameter, wherein during training of the local ML model, the global parameter is fixed.

**15.** A client device comprising a processor coupled to memory, wherein the processor is configured to:

receive, from a server, a global parameter for a trained global ML model which has been trained using any one of claims 1 to 9;
determine whether there is a set of personal data on the client device;
when there is no set of personal data, optimise a local parameter of the local ML model using the received global parameter, by applying a regularisation term which penalises deviation between the optimised local parameter and the received global parameter, and
when there is a set of personal data, optimise a local parameter of the local ML model using the received global parameter by applying a regularisation term which penalises deviation between the optimised local parameter and the received global parameter and by applying a loss function over the set of personal data;
outputting the optimised local parameter as a personalised model; and
predicting, using the personalised model, an output based on a newly received input.

FIGURE 1a

FIGURE 1b

FIGURE 1c

FIGURE 1d

---

**Algorithm 2** Training algorithm: **General framework.**

---

**Input:** Initial parameters $L_0$ in the variational posterior $q(\phi; L_0)$.
**Output:** Trained parameters $L_0$.
**For** each round $r = 1, 2, \ldots, R$ **do:**
    1. Sample a subset $\mathcal{I}$ of participating clients ($|\mathcal{I}| = N_f \leq N$).
    2. Server sends $L_0$ to all clients $i \in \mathcal{I}$.
    3. **For** each client $i \in \mathcal{I}$ **in parallel do:**
        Solve (by SGD) with $L_0$ fixed:

$$\min_{L_i} \mathbb{E}_{q_i(\theta_i; L_i)}[-\log p(D_i|\theta_i)] + \mathbb{E}_{q(\phi; L_0)}\big[\mathrm{KL}(q_i(\theta_i; L_i) \| p(\theta_i|\phi))\big],$$

        Initial $L_i$ can be either copied from $L_0$ or the last iterate if the client is able to save $L_i$ locally.
    4. Each client $i \in \mathcal{I}$ sends the updated $L_i$ back to the server.
    5. Upon receiving $\{L_i\}_{i\in\mathcal{I}}$, the server updates $L_0$ by solving (with $\{L_i\}_{i\in\mathcal{I}}$ fixed):

$$\min_{L_0} \mathrm{KL}(q(\phi; L_0) \| p(\phi)) - \frac{N}{N_f} \sum_{i\in\mathcal{I}} \mathbb{E}_{q(\phi; L_0) q_i(\theta_i; L_i)}[\log p(\theta_i|\phi)].$$

---

FIGURE 2a

FIGURE 2b

FIGURE 2c

FIGURE 2d

35

---

**Algorithm 1** Bayesian FL Algorithm as Block-Coordinate Descent.

---

We define the following hyperparameters:

- $N_f$ ($\leq N$) = the number of participating clients at each round.
- $M$ = the number of SGD iterations per round for updating the (participating) clients.
- Let $M_S$ = the number of SGD iterations per round for updating the server.
- Let $\eta_t$ = the reciprocal of the SGD learning rate at iteration $t$.

Initialise the global iteration counter $t = 0$.

**for** each round **do**

- Select $N_f$ clients uniformly at random from $\{1, \ldots, N\}$ without replacement. Let $u_t \subseteq \{1, \ldots, N\}$ be the set of the participants ($|u_t| = N_f$).
- (Client update) For each of $M$ iterations,
    1. Perform an SGD update for the block $u_t$. That is,

$$x^{t+1} := [x_{u_t}^{t+1}; x_{-u_t}^t], \quad \text{where } x_{u_t}^{t+1} = x_{u_t}^t - \frac{1}{\eta_t} \nabla_{u_t} f_t(x^t), \tag{91}$$

where $f_t$ is the minibatch version of $f$ defined on the minibatch data $batch_t$ (so that $\mathbb{E}_{batch_t}[f_t(x)] = f(x)$). Note that this update is actually done independently over the participating clients $i \in u_t$ due to the separable objective, i.e., from (4) to (5).
    2. $t \leftarrow t + 1$.
- (Server update) For each of $M_S$ iterations,
    1. Perform SGD update for the index (singleton block) 0. That is,

$$x^{t+1} := [x_0^{t+1}; x_{-0}^t], \quad \text{where } x_0^{t+1} = x_0^t - \frac{1}{\eta_t} \nabla_0 f_t(x^t). \tag{92}$$

    2. $t \leftarrow t + 1$.

**end for**

---

# FIGURE 2e

---

**Algorithm 5** Global prediction: **General framework**.

---

**Input:** Test input $x^*$. Learned model $L_0$ in the variational posterior $q(\phi; L_0)$.
**Output:** Predictive distribution $p(y^*|x^*, D_{1:N})$.
1. Sample $\theta^{(s)} \sim \int p(\theta|\phi) \, q(\phi; L_0) \, d\phi$ for $s = 1, \ldots, S$.
2. Return $p(y^*|x^*, D_{1:N}) \approx \frac{1}{S} \sum_{s=1}^S p(y^*|x^*, \theta^{(s)})$.

---

# FIGURE 2f

---

**Algorithm 8** Personalisation: **General framework**.

---

**Input:** Personal training data $D^p$. Test input $x^p$. Learned model $L_0$ in the variational posterior $q(\phi; L_0)$.
**Output:** Predictive distribution $p(y^p|x^p, D^p, D_{1:N})$.
1. Estimate the variational density $v(\theta) \approx p(\theta|D^p, \phi^*)$ by solving (via SGD):

$$\min_v \ \mathbb{E}_{v(\theta)}[-\log p(D^p|\theta)] + \text{KL}(v(\theta)\|p(\theta|\phi^*)), \quad \text{where } \phi^* = \arg\max_\phi q(\phi; L_0).$$

2. Sample $\theta^{(s)} \sim v(\theta)$ for $s = 1, \ldots, S$.
3. Return $p(y^p|x^p, D^p, D_{1:N}) \approx \frac{1}{S} \sum_{s=1}^S p(y^p|x^p, \theta^{(s)})$.

---

# FIGURE 2i

| Server | | Client device |
|---|---|---|

FIGURE 2g

FIGURE 2h

FIGURE 2k

| Server | Client device |
|---|---|

Obtain personal training data S240

Receive an input to be modelled S242

Send the parameters for the global model to the participating clients S244 → Receive the parameters for the global model from the server S246

Personalise the global model S248

Infer an output using the personalised model S250

Output S252

FIGURE 2j

---

**Algorithm 3** Training algorithm: **Normal-Inverse-Wishart case.**

---

**Input:** Initial $L_0 = (m_0, V_0)$ in $q(\phi; L_0) = \mathcal{NIW}(\phi; \{m_0, V_0, l_0 = |D| + 1, n_0 = |D| + d + 2\})$ where $|D| = \sum_{i=1}^{N} |D_i|$ and $d =$ the number of parameters in the backbone network $p(y|x, \theta)$.

**Output:** Trained parameters $L_0 = (m_0, V_0)$.

**For** each round $r = 1, 2, \ldots, R$ **do**:

1. Sample a subset $\mathcal{I}$ of participating clients ($|\mathcal{I}| = N_f \leq N$).
2. Server sends $L_0 = (m_0, V_0)$ to all clients $i \in \mathcal{I}$.
3. **For** each client $i \in \mathcal{I}$ **in parallel do**:

Solve (by SGD) with $L_0 = (m_0, V_0)$ fixed:

$$\min_{m_i} \; -\log p(D_i | \tilde{m}_i) + \frac{p}{2}(n_0 + d + 1)(m_i - m_0)^\top V_0^{-1}(m_i - m_0),$$

where $\tilde{m}_i$ is the dropout version (with probability $1 - p$) of $m_i$.

Initial $m_i$ can be either copied from $m_0$ or the last iterate if the client is able to save $m_i$ locally.

4. Each client $i \in \mathcal{I}$ sends the updated $L_i = m_i$ back to the server.
5. Upon receiving $\{m_i\}_{i \in \mathcal{I}}$, the server updates $L_0 = (m_0, V_0)$ by:

$$m_0^* = \frac{p}{N+1}\frac{N}{N_f}\sum_{i \in \mathcal{I}} m_i, \quad V_0^* = \frac{n_0}{N+d+2}\left((1 + N\epsilon^2)I + m_0^*(m_0^*)^\top + \frac{N}{N_f}\sum_{i \in \mathcal{I}}\rho(m_0^*, m_i, p)\right),$$

where $\rho(m_0, m_i, p) = pm_i m_i^\top - pm_0 m_i^\top - pm_i m_0^\top + m_0 m_0^\top$.

---

## FIGURE 3a

## FIGURE 3b

---

**Algorithm 6** Global prediction: **Normal-Inverse-Wishart case.**

---

**Input:** Test input $x^*$. Learned model $L_0 = (m_0, V_0)$ in $q(\phi; L_0) = \mathcal{NIW}(\phi; \{m_0, V_0, l_0, n_0\})$.

**Output:** Predictive distribution $p(y^* | x^*, D_{1:N})$.

1. Sample $\theta^{(s)} \sim t_{n_0 - d + 1}\left(\theta; m_0, \frac{(l_0 + 1)V_0}{l_0(n_0 - d + 1)}\right)$ for $s = 1, \ldots, S$.
2. Return $p(y^* | x^*, D_{1:N}) \approx \frac{1}{S}\sum_{s=1}^{S} p(y^* | x^*, \theta^{(s)})$.

---

## FIGURE 3c

FIGURE 3d

**Algorithm 9** Personalisation: **Normal-Inverse-Wishart case**.

**Input:** Personal training data $D^p$. Test input $x^p$.
  Learned model $L_0 = (m_0, V_0)$ in $q(\phi; L_0) = \mathcal{NIW}(\phi; \{m_0, V_0, l_0, n_0\})$.
**Output:** Predictive distribution $p(y^p | x^p, D^p, D_{1:N})$.

1. Estimate $m$ in $v(\theta; m) = \prod_l \left( p \cdot \mathcal{N}(\theta[l]; m[l], \epsilon^2 I) + (1 - p) \cdot \mathcal{N}(\theta[l]; 0, \epsilon^2 I) \right)$ by solving (via SGD):

$$\min_m \ - \log p(D^p | \tilde{m}) + \frac{p}{2}(n_0 + d + 1)(m - m_0)^\top V_0^{-1}(m - m_0),$$

  where $\tilde{m}$ is the dropout version (with probability $1 - p$) of $m$.
2. Return $p(y^p | x^p, D^p, D_{1:N}) \approx p(y^p | x^p, m)$.

FIGURE 3e

---

**Algorithm 4** Training algorithm: **Mixture case.**

---

**Input:** Initial $L_0 = \{r_j\}_{j=1}^K$ in $q(\phi; L_0) = \prod_j \mathcal{N}(\mu_j; r_j, \epsilon^2 I)$ and $\beta$ in the gating network $g(x; \beta)$.
**Output:** Trained parameters $L_0 = \{r_j\}_{j=1}^K$ and $\beta$.
**For** each round $r = 1, 2, \ldots, R$ **do:**
   1. Sample a subset $\mathcal{I}$ of participating clients ($|\mathcal{I}| = N_f \leq N$).
   2. Server sends $L_0 = \{r_j\}_{j=1}^K$ and $\beta$ to all clients $i \in \mathcal{I}$.
   3. **For** each client $i \in \mathcal{I}$ **in parallel do**:
      Solve (by SGD) with $L_0 = \{r_j\}_{j=1}^K$ fixed:

$$\min_{m_i} \mathbb{E}_{q_i(\theta_i; m_i)}[-\log p(D_i|\theta_i)] - \log \sum_{j=1}^K \exp\left(-\frac{\|m_i - r_j\|^2}{2\sigma^2}\right), \text{ where } q_i(\theta_i; m_i) = \mathcal{N}(\theta_i; m_i, \epsilon^2 I).$$

      Initial $m_i$ can be either the center of $\{r_j\}_{j=1}^K$ or the last iterate if the client is able to save $m_i$ locally.

      $\beta_i$ = SGD update of $\beta$ in $g(x; \beta)$ with data $\{(x, j^*)\}_{x \sim D_i}$ where $j^* = \arg\min_j \|m_i - r_j\|$.
   4. Each client $i \in \mathcal{I}$ sends the updated $L_i = m_i$ and $\beta_i$ back to the server.
   5. Upon receiving $\{m_i\}_{\in \mathcal{I}}$ and $\{\beta_i\}_{\in \mathcal{I}}$, the server updates $L_0 = \{r_j\}_{j=1}^K$ by the one-step EM:

$$\text{(E-step)} \quad c(j|i) = \frac{e^{-\|m_i - r_j\|^2/(2\sigma^2)}}{\sum_{j=1}^K e^{-\|m_i - r_j\|^2/(2\sigma^2)}}, \quad \text{(M-step)} \quad r_j^* = \frac{\frac{1}{N_f}\sum_{i \in \mathcal{I}} c(j|i) \cdot m_i}{\frac{\sigma^2}{N} + \frac{1}{N_f}\sum_{i \in \mathcal{I}} c(j|i)},$$

   and updates $\beta$ by aggregation: $\beta^* = \frac{1}{N_f}\sum_{i \in \mathcal{I}} \beta_i$.

---

# FIGURE 4a

---

**Algorithm 7** Global prediction: **Mixture case.**

---

**Input:** Test input $x^*$. Learned model $L_0 = \{r_j\}_{j=1}^K$ in $q(\phi; L_0) = \prod_j \mathcal{N}(\mu_j; r_j, \epsilon^2 I)$ and $\beta$ in $g(x; \beta)$.
**Output:** Predictive distribution $p(y^*|x^*, D_{1:N})$.
1. Return $p(y^*|x^*, D_{1:N}) \approx \sum_{j=1}^K g_j(x^*) \cdot p(y^*|x^*, r_j)$.

---

# FIGURE 4b

---

**Algorithm 10** Personalisation: **Mixture case.**

---

**Input:** Personal training data $D^p$. Test input $x^p$.
     Learned model $L_0 = \{r_j\}_{j=1}^K$ in $q(\phi; L_0) = \prod_j \mathcal{N}(\mu_j; r_j, \epsilon^2 I)$.
**Output:** Predictive distribution $p(y^p|x^p, D^p, D_{1:N})$.
1. Estimate $m$ in $v(\theta; m) = \mathcal{N}(\theta; m, \epsilon^2 I)$ by solving (via SGD):

$$\min_m \mathbb{E}_{v(\theta; m)}[-\log p(D^p|\theta)] - \log \sum_{j=1}^K \exp\left(-\frac{\|m - r_j\|^2}{2\sigma^2}\right).$$

2. Return $p(y^p|x^p, D^p, D_{1:N}) \approx p(y^p|x^p, m)$.

---

# FIGURE 4c

FIGURE 5a

Table 1: (CIFAR-100) Global prediction and personalisation accuracy.

(a) Global prediction performance (initial accuracy)

| FL settings | | | Our Methods | | Fed-BABU | Fed-Avg | Fed-Prox | pFedBayes | FedPA | FedBE | FedEM | FedPop |
|---|---|---|---|---|---|---|---|---|---|---|---|---|
| s | f | τ | NIW | Mix ($K=2$) | [45] | [44] | [34] | [60] | [4] | [16] | [41] | [32] |
| 100 | 0.1 | 1 | **$49.76^{0.12}$** | $49.37^{0.30}$ | $42.35^{0.42}$ | $40.87^{0.62}$ | $41.49^{0.75}$ | $37.23^{0.88}$ | $42.15^{0.78}$ | $42.49^{0.89}$ | $43.83^{1.07}$ | $43.09^{0.30}$ |
| | | 10 | **$29.02^{0.33}$** | **$29.02^{0.29}$** | $27.93^{0.28}$ | $28.26^{0.19}$ | $27.11^{0.11}$ | $28.21^{1.42}$ | $28.05^{0.28}$ | $28.39^{0.45}$ | $28.62^{0.26}$ | $28.31^{0.42}$ |
| | 1.0 | 1 | **$57.80^{0.10}$** | $52.94^{0.36}$ | $48.17^{0.56}$ | $47.44^{0.20}$ | $47.66^{1.40}$ | $44.89^{0.32}$ | $47.96^{0.17}$ | $48.69^{0.70}$ | $50.28^{0.72}$ | $48.36^{0.44}$ |
| | | 10 | $29.53^{0.42}$ | **$30.55^{0.15}$** | $28.67^{0.51}$ | $28.79^{0.68}$ | $27.43^{0.38}$ | $28.25^{0.81}$ | $28.89^{0.38}$ | $28.60^{1.18}$ | $29.51^{0.12}$ | $28.99^{0.47}$ |
| 10 | 0.1 | 1 | $37.54^{0.25}$ | **$38.07^{0.40}$** | $35.04^{0.56}$ | $27.48^{0.86}$ | $34.73^{0.21}$ | $31.49^{0.18}$ | $35.51^{0.55}$ | $35.17^{0.40}$ | $37.28^{0.26}$ | $35.01^{0.58}$ |
| | | 10 | **$18.99^{0.03}$** | $18.95^{0.13}$ | $18.54^{0.37}$ | $14.69^{0.40}$ | $16.84^{0.46}$ | $17.93^{0.68}$ | $18.59^{0.19}$ | $18.67^{0.00}$ | $18.45^{0.10}$ | $18.68^{0.12}$ |
| | 1.0 | 1 | **$50.40^{0.11}$** | $49.52^{0.88}$ | $45.41^{0.11}$ | $37.10^{0.44}$ | $44.33^{0.31}$ | $39.95^{0.89}$ | $45.08^{0.72}$ | $45.56^{0.52}$ | $47.52^{0.59}$ | $44.98^{0.27}$ |
| | | 10 | $22.87^{0.41}$ | **$23.59^{0.47}$** | $21.92^{0.66}$ | $17.38^{0.32}$ | $19.54^{0.38}$ | $21.85^{0.50}$ | $22.60^{0.29}$ | $21.73^{0.64}$ | $22.51^{0.06}$ | $22.06^{0.40}$ |

(b) Personalisation performance

| FL settings | | | Our Methods | | Fed-BABU | Fed-Avg | Fed-Prox | pFedBayes | FedPA | FedBE | FedEM | FedPop |
|---|---|---|---|---|---|---|---|---|---|---|---|---|
| s | f | τ | NIW | Mix ($K=2$) | [45] | [44] | [34] | [60] | [4] | [16] | [41] | [32] |
| 100 | 0.1 | 1 | $54.16^{0.50}$ | **$56.17^{0.16}$** | $50.43^{0.93}$ | $46.43^{0.82}$ | $49.91^{0.78}$ | $45.83^{1.12}$ | $49.88^{0.49}$ | $50.57^{1.03}$ | $47.28^{0.88}$ | $51.22^{0.37}$ |
| | | 10 | **$36.68^{0.37}$** | $36.32^{0.27}$ | $35.45^{0.34}$ | $33.57^{0.06}$ | $33.92^{0.22}$ | $35.74^{1.36}$ | $35.06^{0.30}$ | $35.51^{0.62}$ | $34.41^{1.13}$ | $35.69^{0.47}$ |
| | 1.0 | 1 | **$60.36^{0.89}$** | $58.82^{0.37}$ | $55.87^{0.01}$ | $53.15^{0.25}$ | $55.50^{0.90}$ | $53.00^{0.48}$ | $55.43^{0.31}$ | $56.25^{0.42}$ | $54.65^{0.49}$ | $55.85^{0.51}$ |
| | | 10 | $35.92^{0.17}$ | **$36.22^{0.17}$** | $35.58^{0.24}$ | $33.82^{1.04}$ | $33.70^{0.42}$ | $35.57^{1.02}$ | $35.21^{0.50}$ | $34.92^{0.94}$ | $35.21^{0.42}$ | $35.36^{0.36}$ |
| 10 | 0.1 | 1 | $79.41^{0.24}$ | **$79.70^{0.19}$** | $75.44^{0.36}$ | $70.36^{1.02}$ | $75.06^{0.67}$ | $73.93^{0.14}$ | $75.76^{0.36}$ | $76.19^{0.42}$ | $75.52^{0.50}$ | $74.97^{0.72}$ |
| | | 10 | $67.35^{1.02}$ | **$67.57^{0.62}$** | $66.24^{0.53}$ | $61.39^{0.27}$ | $64.86^{0.73}$ | $65.82^{0.33}$ | $65.87^{0.21}$ | $66.64^{0.25}$ | $67.11^{0.11}$ | $66.70^{0.55}$ |
| | 1.0 | 1 | **$82.71^{0.37}$** | $81.03^{0.35}$ | $78.92^{0.23}$ | $76.98^{0.66}$ | $78.56^{0.55}$ | $78.08^{0.28}$ | $78.84^{0.16}$ | $79.82^{0.52}$ | $80.65^{0.32}$ | $78.96^{0.14}$ |
| | | 10 | **$67.78^{1.02}$** | $66.74^{0.27}$ | $66.25^{0.46}$ | $63.81^{0.40}$ | $63.81^{0.51}$ | $66.15^{1.29}$ | $66.23^{0.29}$ | $66.06^{0.54}$ | $66.34^{0.12}$ | $66.57^{0.44}$ |

FIGURE 5b

EP 4 345 697 A1

FIGURE 5c

**Table 2: (MNIST / Fashion-MNIST / EMNIST) Global prediction and personalisation accuracy.**

(a) Global prediction performance (initial accuracy)

| Dataset | FL settings | | | Our Methods | | Fed-BABU | Fed-Avg | Fed-Prox | pFedBayes | FedPA | FedBE | FedEM | FedPop |
|---|---|---|---|---|---|---|---|---|---|---|---|---|---|
| | $s$ | $f$ | $\tau$ | NIW | Mix ($K=2$) | [45] | [44] | [34] | [60] | [4] | [16] | [41] | [32] |
| MNIST | 5 | 0.1 | 1 | 97.81 | **97.94** | 97.16 | 97.15 | 97.38 | 97.32 | 93.38 | 97.16 | 97.38 | 97.42 |
| | | | 5 | 95.51 | **95.68** | 94.59 | 94.86 | 95.28 | 94.28 | 94.87 | 95.11 | 95.33 | 94.98 |
| FMNIST | 5 | 0.1 | 1 | 84.18 | **84.28** | 83.86 | 81.98 | 83.25 | 81.20 | 81.10 | 80.35 | 83.51 | 82.40 |
| | | | 5 | 77.48 | **77.60** | 76.10 | 73.70 | 73.67 | 72.35 | 73.47 | 73.28 | 76.69 | 72.93 |
| EMNIST | 5 | 0.2 | 1 | 85.40 | **85.58** | 84.33 | 85.27 | 85.27 | 84.65 | 83.20 | 85.24 | 85.21 | 85.27 |

(b) Personalisation performance

| Dataset | FL settings | | | Our Methods | | Fed-BABU | Fed-Avg | Fed-Prox | pFedBayes | FedPA | FedBE | FedEM | FedPop |
|---|---|---|---|---|---|---|---|---|---|---|---|---|---|
| | $s$ | $f$ | $\tau$ | NIW | Mix ($K=2$) | [45] | [44] | [34] | [60] | [4] | [16] | [41] | [32] |
| MNIST | 5 | 0.1 | 1 | 98.78 | **98.85** | 97.73 | 97.83 | 97.96 | 97.88 | 96.66 | 97.62 | 97.89 | 97.91 |
| | | | 5 | 96.53 | **96.67** | 95.89 | 96.10 | 96.45 | 95.49 | 95.93 | 96.37 | 96.46 | 95.80 |
| FMNIST | 5 | 0.1 | 1 | 92.48 | **92.54** | 91.03 | 90.59 | 90.72 | 90.31 | 91.60 | 89.96 | 92.10 | 91.14 |
| | | | 5 | **89.91** | 89.53 | 89.02 | 86.85 | 87.35 | 86.38 | 88.76 | 85.00 | 89.65 | 86.40 |
| EMNIST | 5 | 0.2 | 1 | 88.84 | **88.97** | 83.09 | 87.92 | 88.39 | 88.12 | 85.10 | 88.37 | 88.32 | 88.40 |

FIGURE 5d

EP 4 345 697 A1

Table 3: (CIFAR-C-100) Global prediction and personalisation accuracy.

(a) Global prediction (initial accuracy) on test splits for the 10 training corruption types

| FL settings | | | Our Methods | | Fed-BABU | Fed-Avg | Fed-Prox | pFedBayes |
|---|---|---|---|---|---|---|---|---|
| s | f | τ | NIW | Mix. ($K = 2$) | | | | |
| 100 | 0.1 | 1 | **81.22**$^{\pm 0.14}$ | 80.34$^{\pm 1.44}$ | 79.45$^{\pm 0.71}$ | 70.01$^{\pm 0.77}$ | 78.94$^{\pm 0.82}$ | 71.14$^{\pm 0.33}$ |
| | | 4 | **67.69**$^{\pm 0.74}$ | 65.81$^{\pm 0.64}$ | 63.58$^{\pm 1.28}$ | 48.47$^{\pm 1.28}$ | 60.96$^{\pm 1.11}$ | 57.88$^{\pm 1.51}$ |
| | 1.0 | 1 | **91.26**$^{\pm 0.83}$ | 86.84$^{\pm 0.22}$ | 86.84$^{\pm 0.83}$ | 85.10$^{\pm 0.18}$ | 87.03$^{\pm 0.55}$ | 82.80$^{\pm 1.28}$ |
| | | 4 | 73.58$^{\pm 1.02}$ | **74.55**$^{\pm 0.22}$ | 71.03$^{\pm 0.75}$ | 58.32$^{\pm 0.07}$ | 65.76$^{\pm 0.10}$ | 64.07$^{\pm 1.89}$ |
| 50 | 0.1 | 1 | 78.63$^{\pm 0.59}$ | **79.36**$^{\pm 0.94}$ | 77.44$^{\pm 1.17}$ | 68.27$^{\pm 0.53}$ | 78.31$^{\pm 0.93}$ | 67.95$^{\pm 0.22}$ |
| | | 4 | **65.08**$^{\pm 1.75}$ | 63.52$^{\pm 0.46}$ | 62.65$^{\pm 0.12}$ | 43.57$^{\pm 1.09}$ | 58.70$^{\pm 1.89}$ | 54.20$^{\pm 1.30}$ |
| | 1.0 | 1 | **89.31**$^{\pm 0.17}$ | 88.24$^{\pm 0.71}$ | 86.44$^{\pm 0.97}$ | 83.31$^{\pm 0.67}$ | 86.00$^{\pm 0.93}$ | 82.32$^{\pm 0.37}$ |
| | | 4 | **70.33**$^{\pm 0.16}$ | 70.19$^{\pm 1.41}$ | 67.66$^{\pm 0.78}$ | 52.48$^{\pm 1.06}$ | 60.72$^{\pm 1.28}$ | 60.17$^{\pm 0.23}$ |

(b) Global prediction (initial accuracy) on the original (uncorrupted) CIFAR-100 training sets

| FL settings | | | Our Methods | | Fed-BABU | Fed-Avg | Fed-Prox | pFedBayes |
|---|---|---|---|---|---|---|---|---|
| s | f | τ | NIW | Mix. ($K = 2$) | | | | |
| 100 | 0.1 | 1 | **41.55**$^{\pm 0.11}$ | 36.99$^{\pm 0.09}$ | 34.76$^{\pm 0.50}$ | 34.40$^{\pm 0.31}$ | 35.44$^{\pm 0.66}$ | 35.78$^{\pm 0.73}$ |
| | | 4 | **30.84**$^{\pm 0.07}$ | 30.60$^{\pm 0.27}$ | 28.31$^{\pm 0.28}$ | 29.24$^{\pm 0.79}$ | 28.09$^{\pm 0.71}$ | 29.12$^{\pm 0.30}$ |
| | 1.0 | 1 | **41.32**$^{\pm 0.32}$ | 38.35$^{\pm 0.73}$ | 35.58$^{\pm 0.41}$ | 36.34$^{\pm 0.14}$ | 36.32$^{\pm 0.58}$ | 37.37$^{\pm 0.62}$ |
| | | 4 | **30.67**$^{\pm 0.12}$ | 30.40$^{\pm 0.44}$ | 28.60$^{\pm 0.28}$ | 30.31$^{\pm 0.87}$ | 27.95$^{\pm 0.28}$ | 29.14$^{\pm 0.57}$ |
| 50 | 0.1 | 1 | **41.04**$^{\pm 0.14}$ | 36.41$^{\pm 0.47}$ | 35.44$^{\pm 0.58}$ | 34.13$^{\pm 0.50}$ | 36.37$^{\pm 0.50}$ | 35.68$^{\pm 0.27}$ |
| | | 4 | **32.29**$^{\pm 0.36}$ | 31.50$^{\pm 0.34}$ | 29.68$^{\pm 0.08}$ | 29.19$^{\pm 0.14}$ | 29.20$^{\pm 0.50}$ | 30.10$^{\pm 0.44}$ |
| | 1.0 | 1 | **41.64**$^{\pm 0.21}$ | 38.54$^{\pm 0.42}$ | 36.09$^{\pm 0.28}$ | 35.78$^{\pm 0.83}$ | 37.13$^{\pm 0.55}$ | 38.39$^{\pm 0.21}$ |
| | | 4 | **32.17**$^{\pm 0.48}$ | 30.68$^{\pm 0.46}$ | 29.28$^{\pm 0.17}$ | 30.45$^{\pm 0.45}$ | 28.73$^{\pm 0.28}$ | 29.74$^{\pm 0.25}$ |

(c) Personalisation performance on the 9 held-out corruption types

| FL settings | | | Our Methods | | Fed-BABU | Fed-Avg | Fed-Prox | pFedBayes |
|---|---|---|---|---|---|---|---|---|
| s | f | τ | NIW | Mix. ($K = 2$) | | | | |
| 100 | 0.1 | 1 | 72.63$^{\pm 2.13}$ | **74.16**$^{\pm 3.04}$ | 69.93$^{\pm 1.24}$ | 62.32$^{\pm 1.46}$ | 72.94$^{\pm 0.37}$ | 62.52$^{\pm 4.01}$ |
| | | 4 | **62.74**$^{\pm 0.94}$ | 61.56$^{\pm 1.09}$ | 60.33$^{\pm 2.12}$ | 53.35$^{\pm 1.39}$ | 56.91$^{\pm 1.40}$ | 53.71$^{\pm 2.13}$ |
| | 1.0 | 1 | 83.62$^{\pm 1.84}$ | **84.88**$^{\pm 0.85}$ | 77.55$^{\pm 2.05}$ | 83.44$^{\pm 1.68}$ | 80.96$^{\pm 1.18}$ | 72.44$^{\pm 0.13}$ |
| | | 4 | 64.84$^{\pm 1.05}$ | **67.35**$^{\pm 1.46}$ | 53.25$^{\pm 2.19}$ | 53.34$^{\pm 1.22}$ | 41.39$^{\pm 1.18}$ | 43.41$^{\pm 1.92}$ |
| 50 | 0.1 | 1 | **75.50**$^{\pm 0.74}$ | 67.33$^{\pm 2.63}$ | 59.47$^{\pm 2.48}$ | 57.77$^{\pm 0.80}$ | 56.34$^{\pm 2.80}$ | 53.47$^{\pm 0.51}$ |
| | | 4 | 44.90$^{\pm 1.23}$ | **46.39**$^{\pm 0.83}$ | 44.74$^{\pm 1.30}$ | 44.60$^{\pm 2.36}$ | 39.94$^{\pm 1.41}$ | 37.24$^{\pm 1.80}$ |
| | 1.0 | 1 | 81.46$^{\pm 0.67}$ | **81.77**$^{\pm 3.11}$ | 67.43$^{\pm 2.58}$ | 72.52$^{\pm 1.02}$ | 71.52$^{\pm 2.02}$ | 68.47$^{\pm 1.43}$ |
| | | 4 | **50.84**$^{\pm 0.74}$ | 48.90$^{\pm 0.51}$ | 40.87$^{\pm 3.01}$ | 45.10$^{\pm 0.50}$ | 41.95$^{\pm 1.28}$ | 41.27$^{\pm 0.14}$ |

FIGURE 5e

## Global prediction ($s = 100$)

FIGURE 6a

## Personalisation ($s = 100$)

FIGURE 6b

FIGURE 6c

FIGURE 6d

Table 4: (CIFAR-100) Global prediction and personalisation accuracy. Mixture order $K$ varied. Comparison with centralised (non-FL) training.

(a) Global prediction performance (initial accuracy)

| FL settings | | | NIW (Ours) | Mixture (Ours) | | | FedBABU | Centralised |
|---|---|---|---|---|---|---|---|---|
| $s$ | $f$ | $\tau$ | | $K=2$ | $K=5$ | $K=10$ | | |
| 100 | 0.1 | 1 | $49.76^{\pm 0.12}$ | $49.37^{\pm 0.30}$ | $46.97^{\pm 0.13}$ | $48.35^{\pm 0.07}$ | $42.35^{\pm 0.42}$ | $52.21^{\pm 0.19}$ |
| | | 10 | $29.02^{\pm 0.33}$ | $29.02^{\pm 0.29}$ | $29.08^{\pm 0.63}$ | $29.90^{\pm 0.25}$ | $27.93^{\pm 0.28}$ | $36.87^{\pm 1.72}$ |
| | 1.0 | 1 | $57.80^{\pm 0.10}$ | $52.94^{\pm 0.36}$ | $52.24^{\pm 0.30}$ | $51.92^{\pm 0.04}$ | $48.17^{\pm 0.56}$ | $58.50^{\pm 0.52}$ |
| | | 10 | $29.53^{\pm 0.42}$ | $30.55^{\pm 0.15}$ | $30.85^{\pm 0.13}$ | $30.24^{\pm 0.69}$ | $28.67^{\pm 0.51}$ | $48.16^{\pm 0.58}$ |
| 10 | 0.1 | 1 | $37.54^{\pm 0.25}$ | $38.07^{\pm 0.40}$ | $39.96^{\pm 0.63}$ | $39.97^{\pm 0.52}$ | $35.04^{\pm 0.56}$ | $28.55^{\pm 1.05}$ |
| | | 10 | $18.99^{\pm 0.03}$ | $18.95^{\pm 0.13}$ | $18.93^{\pm 0.37}$ | $18.95^{\pm 0.03}$ | $18.54^{\pm 0.37}$ | $9.92^{\pm 0.33}$ |
| | 1.0 | 1 | $50.40^{\pm 0.11}$ | $49.52^{\pm 0.88}$ | $49.82^{\pm 0.43}$ | $49.51^{\pm 0.56}$ | $45.41^{\pm 0.11}$ | $78.37^{\pm 0.88}$ |
| | | 10 | $22.87^{\pm 0.41}$ | $23.59^{\pm 0.47}$ | $23.69^{\pm 0.76}$ | $24.28^{\pm 1.04}$ | $21.92^{\pm 0.66}$ | $4.40^{\pm 0.21}$ |

(b) Personalisation performance

| FL settings | | | NIW (Ours) | Mixture (Ours) | | | FedBABU | Centralised |
|---|---|---|---|---|---|---|---|---|
| $s$ | $f$ | $\tau$ | | $K=2$ | $K=5$ | $K=10$ | | |
| 100 | 0.1 | 1 | $54.16^{\pm 0.50}$ | $56.17^{\pm 0.16}$ | $54.93^{\pm 0.25}$ | $55.83^{\pm 0.47}$ | $50.43^{\pm 0.93}$ | $53.18^{\pm 0.10}$ |
| | | 10 | $36.68^{\pm 0.37}$ | $36.32^{\pm 0.27}$ | $37.30^{\pm 0.04}$ | $37.34^{\pm 0.56}$ | $35.45^{\pm 0.94}$ | $38.20^{\pm 1.58}$ |
| | 1.0 | 1 | $60.36^{\pm 0.89}$ | $58.82^{\pm 0.37}$ | $58.16^{\pm 0.26}$ | $58.32^{\pm 0.34}$ | $55.87^{\pm 0.91}$ | $58.49^{\pm 0.50}$ |
| | | 10 | $35.92^{\pm 0.17}$ | $36.22^{\pm 0.17}$ | $36.44^{\pm 0.15}$ | $35.91^{\pm 0.15}$ | $35.58^{\pm 0.24}$ | $48.17^{\pm 0.59}$ |
| 10 | 0.1 | 1 | $79.41^{\pm 0.34}$ | $70.70^{\pm 0.19}$ | $79.29^{\pm 0.19}$ | $77.44^{\pm 0.54}$ | $75.44^{\pm 0.36}$ | $42.04^{\pm 1.36}$ |
| | | 10 | $67.35^{\pm 1.02}$ | $67.57^{\pm 0.62}$ | $67.84^{\pm 0.40}$ | $67.33^{\pm 0.29}$ | $66.24^{\pm 0.53}$ | $17.40^{\pm 1.05}$ |
| | 1.0 | 1 | $82.71^{\pm 0.37}$ | $81.03^{\pm 0.35}$ | $79.91^{\pm 0.25}$ | $80.92^{\pm 0.19}$ | $78.92^{\pm 0.23}$ | $78.43^{\pm 0.90}$ |
| | | 10 | $67.78^{\pm 1.02}$ | $66.74^{\pm 0.27}$ | $66.50^{\pm 0.24}$ | $67.30^{\pm 0.29}$ | $66.25^{\pm 0.46}$ | $5.13^{\pm 0.19}$ |

FIGURE 6e

Table 5: (CIFAR-C-100) Global prediction and personalisation accuracy. Mixture order $K$ varied. Comparison with centralised (non-FL) training.

(a) Global prediction (initial accuracy) on test splits for the 10 training corruption types

| FL settings | | | NIW (Ours) | Mixture (Ours) | | | FedBABU | Centralised |
|---|---|---|---|---|---|---|---|---|
| $s$ | $f$ | $\tau$ | | $K=2$ | $K=5$ | $K=10$ | | |
| 100 | 0.1 | 1 | $81.22^{\pm0.14}$ | $80.34^{\pm1.44}$ | $81.30^{\pm0.21}$ | $81.23^{\pm0.79}$ | $79.45^{\pm0.71}$ | $87.68^{\pm0.48}$ |
| | | 4 | $67.69^{\pm0.74}$ | $65.81^{\pm0.84}$ | $64.37^{\pm0.99}$ | $66.72^{\pm1.46}$ | $63.58^{\pm1.26}$ | $76.82^{\pm1.17}$ |
| | 1.0 | 1 | $91.26^{\pm0.83}$ | $86.84^{\pm0.22}$ | $86.41^{\pm0.56}$ | $87.04^{\pm0.33}$ | $86.84^{\pm0.83}$ | $90.22^{\pm0.57}$ |
| | | 4 | $73.58^{\pm1.02}$ | $74.55^{\pm0.22}$ | $74.53^{\pm0.81}$ | $75.03^{\pm0.45}$ | $71.03^{\pm0.75}$ | $87.71^{\pm0.01}$ |
| 50 | 0.1 | 1 | $78.63^{\pm0.39}$ | $79.36^{\pm0.24}$ | $78.23^{\pm0.33}$ | $78.45^{\pm0.40}$ | $77.44^{\pm1.17}$ | $84.97^{\pm0.22}$ |
| | | 4 | $65.08^{\pm1.75}$ | $63.52^{\pm0.46}$ | $63.08^{\pm0.55}$ | $63.13^{\pm0.21}$ | $62.65^{\pm0.12}$ | $70.76^{\pm2.93}$ |
| | 1.0 | 1 | $89.31^{\pm0.17}$ | $88.24^{\pm0.71}$ | $87.81^{\pm0.66}$ | $87.02^{\pm0.19}$ | $86.44^{\pm0.97}$ | $89.92^{\pm0.47}$ |
| | | 4 | $70.33^{\pm0.16}$ | $70.19^{\pm1.41}$ | $71.87^{\pm2.31}$ | $74.18^{\pm0.46}$ | $67.66^{\pm0.78}$ | $86.40^{\pm1.00}$ |

(b) Global prediction (initial accuracy) on the original (uncorrupted) CIFAR-100 training sets

| FL settings | | | NIW (Ours) | Mixture (Ours) | | | FedBABU | Centralised |
|---|---|---|---|---|---|---|---|---|
| $s$ | $f$ | $\tau$ | | $K=2$ | $K=5$ | $K=10$ | | |
| 100 | 0.1 | 1 | $41.55^{\pm0.11}$ | $36.99^{\pm0.09}$ | $37.75^{\pm0.50}$ | $37.78^{\pm0.44}$ | $34.76^{\pm0.50}$ | $35.10^{\pm0.65}$ |
| | | 4 | $30.84^{\pm0.07}$ | $30.60^{\pm0.27}$ | $30.51^{\pm0.20}$ | $29.13^{\pm0.15}$ | $28.31^{\pm0.26}$ | $33.64^{\pm1.09}$ |
| | 1.0 | 1 | $41.32^{\pm0.32}$ | $38.35^{\pm0.73}$ | $38.85^{\pm0.96}$ | $38.97^{\pm0.26}$ | $35.58^{\pm0.41}$ | $32.78^{\pm0.22}$ |
| | | 4 | $30.67^{\pm0.12}$ | $30.40^{\pm0.44}$ | $30.57^{\pm0.28}$ | $30.95^{\pm0.28}$ | $28.60^{\pm0.26}$ | $28.95^{\pm2.09}$ |
| 50 | 0.1 | 1 | $41.04^{\pm0.14}$ | $36.41^{\pm0.47}$ | $36.03^{\pm0.24}$ | $38.32^{\pm0.07}$ | $35.44^{\pm0.58}$ | $35.71^{\pm0.13}$ |
| | | 4 | $32.29^{\pm0.36}$ | $31.50^{\pm0.34}$ | $31.19^{\pm0.26}$ | $31.06^{\pm0.56}$ | $29.68^{\pm0.06}$ | $35.28^{\pm1.47}$ |
| | 1.0 | 1 | $41.64^{\pm0.21}$ | $38.54^{\pm0.42}$ | $39.19^{\pm0.37}$ | $38.93^{\pm0.15}$ | $36.09^{\pm0.26}$ | $33.49^{\pm0.17}$ |
| | | 4 | $32.17^{\pm0.46}$ | $30.68^{\pm0.46}$ | $31.29^{\pm0.65}$ | $32.46^{\pm0.26}$ | $29.28^{\pm0.17}$ | $29.50^{\pm1.24}$ |

(c) Personalisation performance on the 9 held-out corruption types

| FL settings | | | NIW (Ours) | Mixture (Ours) | | | FedBABU | Centralised |
|---|---|---|---|---|---|---|---|---|
| $s$ | $f$ | $\tau$ | | $K=2$ | $K=5$ | $K=10$ | | |
| 100 | 0.1 | 1 | $72.63^{\pm2.13}$ | $74.16^{\pm3.04}$ | $74.43^{\pm4.94}$ | $75.65^{\pm4.68}$ | $69.93^{\pm1.24}$ | $88.76^{\pm0.31}$ |
| | | 4 | $62.74^{\pm0.94}$ | $61.56^{\pm1.69}$ | $60.46^{\pm0.13}$ | $64.41^{\pm2.66}$ | $60.33^{\pm2.12}$ | $80.47^{\pm0.99}$ |
| | 1.0 | 1 | $83.62^{\pm1.84}$ | $84.88^{\pm0.83}$ | $83.01^{\pm1.79}$ | $82.58^{\pm0.91}$ | $77.55^{\pm2.05}$ | $87.55^{\pm2.83}$ |
| | | 4 | $64.84^{\pm1.05}$ | $67.35^{\pm1.46}$ | $64.34^{\pm0.75}$ | $65.12^{\pm0.77}$ | $53.25^{\pm2.19}$ | $76.58^{\pm12.63}$ |
| 50 | 0.1 | 1 | $75.50^{\pm9.74}$ | $67.33^{\pm2.83}$ | $67.32^{\pm1.35}$ | $65.34^{\pm3.19}$ | $59.47^{\pm2.48}$ | $84.08^{\pm1.03}$ |
| | | 4 | $44.90^{\pm1.23}$ | $46.39^{\pm0.83}$ | $45.95^{\pm0.37}$ | $45.43^{\pm0.34}$ | $44.74^{\pm1.30}$ | $74.14^{\pm2.51}$ |
| | 1.0 | 1 | $81.46^{\pm0.67}$ | $81.77^{\pm3.11}$ | $78.03^{\pm1.05}$ | $74.62^{\pm1.95}$ | $67.43^{\pm2.58}$ | $87.57^{\pm1.62}$ |
| | | 4 | $50.84^{\pm0.74}$ | $48.90^{\pm0.51}$ | $45.07^{\pm1.15}$ | $48.78^{\pm0.49}$ | $40.87^{\pm3.01}$ | $81.46^{\pm1.11}$ |

FIGURE 6f

| | Communication cost | | Client Local update | Server update |
|---|---|---|---|---|
| | Server → Client | Client → Server | | |
| NIW | $2d$ (sent: $m_0, V_0$) | $d$ (sent: $m_i$) | $F + B + O(d)$ ($O(d)$ from quadratic penalty) | $O(N_f \cdot d)$ |
| Mixture (Order $K$) | $(K+1)d$ (sent: $\{r_j\}_{j=1}^K, \beta$) | $2d$ (sent: $m_i, \beta_i$) | $2(F + B) + O(K \cdot d)$ ($O(K \cdot d)$ from log-sum-exp) | $O(K \cdot N_f \cdot d)$ |
| FedAvg | $d$ (sent: $\theta$) | $d$ (sent: $\theta_i$) | $F + B$ | $O(N_f \cdot d)$ (aggregation) |

FIGURE 7a

| | Per-test-batch complexity |
|---|---|
| NIW | $S \cdot F + O(S \cdot d)$ ($O(S \cdot d)$ from the cost of $t$-sampling) |
| Mixture (Order $K$) | $(K+1)F$ (a forward pass for the gating network) |
| FedAvg | $F$ |

FIGURE 7b

| | Training (personalisation) complexity | Test complexity |
|---|---|---|
| NIW | $F + B + O(d)$ ($O(d)$ from quadratic penalty) | $F$ |
| Mixture (Order $K$) | $F + B + O(K \cdot d)$ ($O(K \cdot d)$ from log-sum-exp) | $F$ |
| FedAvg | $F + B$ | $F$ |

FIGURE 7c

| | | Fed-BABU | NIW | Mix. ($K = 2$) | Mix. ($K = 5$) |
|---|---|---|---|---|---|
| Train | Client | 0.283 | 0.362 | 0.481 | 0.595 |
| | Server | 0.027 | 0.267 | 1.283 | 1.434 |
| Global prediction | | 0.021 | 0.025 | 0.040 | 0.060 |
| Personalisation | | 1.581 | 2.158 | 2.421 | 2.766 |

FIGURE 7d

300

## Server 302

| Processor(s) 304 | Training Data Set 308 |
|---|---|
| Memory 306 | Global ML Model 310 |

## Client Device 312

| Processor(s) 314 | Memory 316 |
|---|---|

Local ML Model 318

Personal Data 320

FIGURE 8

Europäisches
Patentamt
European
Patent Office
Office européen
des brevets

# EUROPEAN SEARCH REPORT

**Application Number**

EP 23 19 8714

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Fang Lei ET AL: "Bayesian Inference Federated Learning for Heart Rate Prediction" In: "Wireless Mobile Communication and Healthcare : 9th EAI International Conference, MobiHealth 2020, Virtual Event, November 19, 2020, Proceedings", 21 February 2021 (2021-02-21), Springer International Publishing, Cham, XP093131303, ISSN: 1867-8211 ISBN: 978-3-030-70569-5 vol. 362, pages 116-130, DOI: 10.1007/978-3-030-70569-5_8, Retrieved from the Internet: URL:http://link.springer.com/10.1007/978-3-030-70569-5_8> * abstract; Sections 1 and 3-5; figure 2 * | 1-15 | INV. G06N7/01 G06N3/098 |
| X | LUCA CORINZIA ET AL: "Variational Federated Multi-Task Learning", ARXIV.ORG, CORNELL UNIVERSITY LIBRARY, 201 OLIN LIBRARY CORNELL UNIVERSITY ITHACA, NY 14853, 4 February 2021 (2021-02-04), XP081873741, * abstract; Sections I, II, IV, and V; figure 1 * | 1-15 | **TECHNICAL FIELDS SEARCHED (IPC)** G06N |
| A | HUILI CHEN ET AL: "Self-Aware Personalized Federated Learning", ARXIV.ORG, CORNELL UNIVERSITY LIBRARY, 201 OLIN LIBRARY CORNELL UNIVERSITY ITHACA, NY 14853, 17 April 2022 (2022-04-17), XP091205179, * abstract; Sections 1-5; Appendix C-E * | 1-15 | |

-/--

The present search report has been drawn up for all claims

| Place of search | Date of completion of the search | Examiner |
|---|---|---|
| The Hague | 16 February 2024 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALYSA ZIYING TAN ET AL: "Towards Personalized Federated Learning", ARXIV.ORG, CORNELL UNIVERSITY LIBRARY, 201 OLIN LIBRARY CORNELL UNIVERSITY ITHACA, NY 14853, 17 March 2022 (2022-03-17), XP091168723, DOI: 10.1109/TNNLS.2022.3160699 * abstract; Sections I-VI; figures 1,3, 4 * | 1-15 | |

|  |  |  | TECHNICAL FIELDS SEARCHED (IPC) |
|---|---|---|---|

The present search report has been drawn up for all claims

| Place of search | Date of completion of the search | Examiner |
|---|---|---|
| The Hague | 16 February 2024 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GAL et al.** Dropout as a Bayesian Approximation: Representing Model Uncertainty in Deep Learning. Conference on Machine Learning, 2016
- **MCMAHAN et al.** Communication-Efficient Learning of Deep Networks from Decentralized Data. AI and Statistics (AISTATS), 2017
- **BABU et al.** FedBABU: Towards Enhanced Representation for Federated Image Classification. *International Conference on Learning Representations,* 2022
- **HOWAARD et al.** MobileNets: Efficient convolutional neural networks for mobile vision applications. *arXiv preprint arXiv: 1704.04861,* 2017
- **MCMAHAN.** *Efficient Learning of Deep Networks from Decentralized Data,* 2017
- **CHEN et al.** FedBE: Making Bayesian Model Ensemble Applicable to Federated Learning. *International Conference on Learning Representations,* 2021
- **MARFOQ et al.** Federated Multi-Task Learning under a Mixture of Distributions. *Advances in Neural Information Processing Systems,* 2021
- **SHEDIVAT.** Federated Learning via Posterior Averaging: A New Perspective and Practical Algorithms. *International Conference on Learning Representations,* 2021

- **TIAN LI ; ANIT KUMAR SAHU ; MANZIL ZAHEER ; MAZIAR SANJABI ; AMEET TALWALKAR ; VIRGINIA SMITH ; LI et al.** Federated Optimization in Heterogeneous Networks. *arXiv:1812.06127,* 2018
- **KOTELEVSKII et al.** FedPop: A Bayesian Approach for Personalised Federated Learning. *Advances in Neural Information Processing Systems,* 2022
- **HENDRYCKS et al.** Benchmarking neural network robustness to common corruptions and perturbations. *International Conference on Learning Representations,* 2019
- **AL-SHEDIVAT et al.** Federated Learning via Posterior Averaging: A New Perspective and Practical Algorithms. *International Conference on Learning Representations,* 2021
- **CHANG et al.** Personalized Federated Learning via Variational Bayesian Inference. *International Conference on Machine Learning,* 2022
- **GUO et al.** Federated Learning as Variational Influence: A Scalable Expectation Propagation Approach. *International Conference on Learning Representation,* 2023
- **GUO et al.** *Partitioned Variational Inference: A framework for probabilistic federated learning,* 2022